# EUROPEAN PATENT APPLICATION

(11) **EP 4 383 792 A1**
(43) Date of publication of application: **12.06.2024**
(21) Application number: 22852336.1
(22) Date of filing: 05.08.2022
(51) Int. Cl.: H04W 24/02

(54) **SIGNAL TRANSCEIVING METHOD AND APPARATUS, AND DEVICE AND STORAGE MEDIUM**

(30) Priority: 06.08.2021 CN 202110904290
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); ZHANG, Yinghao, Beijing 100085 (CN); CHENG, Fang-Chen, Beijing 100085 (CN)
(74) Representative: dompatent von Kreisler Selting Werner - Partnerschaft von Patent- und Rechtsanwälten mbB
(86) International application number: PCT/CN2022/110523
(87) International publication number: WO 2023/011625

(57) **Abstract**

Provided in the embodiments of the present disclosure is a signal transceiving method. The method is applied to a network device, and comprises: generating configuration information for signal transceiving, wherein the configuration information comprises information corresponding to at least two transceiving mechanisms, and the at least two transceiving mechanisms comprise a first transceiving mechanism for representing CSI measurement and/or reporting; and sending the configuration information to a terminal, so that the terminal performs signal transceiving according to the configuration information. Therefore, by means of the embodiments of the present disclosure, a terminal is configured with other transceiving mechanisms in addition to CSI measurement and/or reporting, such that the problem of the coexistence of various types of mechanisms is solved, and CSI measurement and/or reporting can also be realized in a timely manner, so as to improve user throughput, and reduce a time delay, thereby improving the system performance.

## Description

### CROSS-REFERENCE TO RELATED APPLICATION

The present application claims priority to Chinese Patent Application No. 2021109042902, filed on August 06, 2021, entitled "Signal Transceiving Method and Apparatus, and Device and Storage Medium", which is hereby incorporated by reference in its entirety.

### FIELD

The present application relates to the field of signal transceiving, and in particular, to signal transceiving methods and apparatuses, devices and storage mediums.

### BACKGROUND

Extended reality (XR) is one of the most important type of media application in the 5th generation (5G) mobile communication system, which is represented by augmented reality (AR), mixed reality (MR), virtual reality (VR), etc., and a real and virtual combined environment and a corresponding human-computer interaction is created through computer technology and wearable devices. A degree of virtuality from AR to VR changes from weak to strong, that is, from AR which supports partial perception through an input by sensors to VR which supports complete virtuality to human senses. Illusions of human vision, hearing or environment are presented by XR devices.

However, an XR service has a quasi-periodic characteristic, and a traditional discontinuous reception (DRX) cycle configuration is difficult to match with the XR service, which will introduce unnecessary waiting for transmission delay.

### SUMMARY

Embodiments of the present application provide signal transceiving methods and apparatuses, devices and storage mediums, to solve the problem that a current discontinuous reception (DRX) cycle configuration is difficult to match with an XR service in the related art. When a network device configures a channel state information (CSI) measurement and/or reporting for a terminal, other transceiving mechanisms are further configured, such as: a physical downlink control channel (PDCCH) monitoring window or opportunity for a dedicated service, a DRX, a wake-up signal (WUS), a PDCCH skipping, a search space switching, etc., which solves a problem of coexistence of multiple mechanisms, allows the CSI measurement and/or reporting to be performed timely, improves user throughput, and reduces latency, thereby improving system performance.

An embodiment of the present application provides a signal transceiving method, applied to a network device, including:
generating configuration information used for signal transceiving, where the configuration information includes information corresponding to at least two transceiving mechanisms, and the at least two transceiving mechanisms include a first transceiving mechanism representing CSI measurement and/or reporting; and
transmitting the configuration information to a terminal, to make the terminal perform signal transceiving based on the configuration information.

In an embodiment, according to the signal transceiving method provided by the present application, the at least two transceiving mechanisms further include one or more of the following:
a second transceiving mechanism representing a PDCCH monitoring window or opportunity for a dedicated service;
a third transceiving mechanism representing a discontinuous reception (DRX);
a fourth transceiving mechanism representing a wake-up signal (WUS);
a fifth transceiving mechanism representing a PDCCH skipping; and
a sixth transceiving mechanism representing a search space switching.

In an embodiment, according to the signal transceiving method provided by the present application, where
information corresponding to the second transceiving mechanism includes a first time window, or a first time window and a first cycle, where the first time window is the PDDCH monitoring window or opportunity for the dedicated service, and the first cycle is a cycle for the PDDCH monitoring window or opportunity for the dedicated service;
information corresponding to the third transceiving mechanism includes a second time window and a second cycle, and/or a third time window and a third cycle, where the second cycle is a long DRX cycle, the second time window is a DRX activation window within the long DRX cycle, the third cycle is a short DRX cycle, and the third time window is a DRX activation window within the short DRX cycle;
information corresponding to the fourth transceiving mechanism includes a fourth time window and a fourth cycle, where the fourth time window is a WUS activation window, and the fourth cycle is a WUS cycle;
information corresponding to the fifth transceiving mechanism includes a fifth time window and a fifth cycle, where the fifth time window is a PDCCH skipping activation window, and the fifth cycle is a PDCCH skipping cycle; and
information corresponding to the sixth transceiving mechanism includes a sixth time window and a sixth cycle, where the sixth time window is a search space activation window, and the sixth cycle is a search space monitoring cycle.

In an embodiment, according to the signal transceiving method provided by the present application, configuration information corresponding to the first transceiving mechanism includes a seventh time window and a seventh cycle, where the seventh time window is a time window for a periodic CSI measurement and/or reporting, and the seventh cycle is a reporting cycle for the periodic CSI measurement and/or reporting;
a seventh transceiving mechanism is used for representing any one of the second transceiving mechanism, the third transceiving mechanism, the fourth transceiving mechanism, the fifth transceiving mechanism, and the sixth transceiving mechanism, and information corresponding to the seventh transceiving mechanism includes an eighth time window and an eighth cycle;
the seventh cycle is N times the eighth cycle, where in case that the seventh transceiving mechanism is the third transceiving mechanism, N is an integer greater than 1; and in case that the seventh transceiving mechanism is any one of the second transceiving mechanism, the fourth transceiving mechanism, the fifth transceiving mechanism and the sixth transceiving mechanism, N is an integer greater than or equal to 1; and
a time domain relationship between the seventh time window and the eighth time window includes at least one of the following:
   a start timing of the seventh time window is not earlier than a start timing of N eighth time windows;
   an end timing of the seventh time window is not later than an end timing of N eighth time windows;
   the end timing of the seventh time window is not later than a start timing of a data transmission;
   an interval between the start timing of the seventh time window and the start timing of the N eighth time windows satisfies a first time threshold condition;
   an interval between the end timing of the seventh time window and the end timing of the N eighth time windows satisfies a second time threshold condition; and
   an interval between the end timing of the seventh time window and the start timing of the data transmission satisfies a third time threshold condition.

In an embodiment, according to the signal transceiving method provided by the present application, configuration information corresponding to the first transceiving mechanism includes a ninth time window and a ninth cycle, where a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism includes the eighth time window and the eighth cycle; and
a time domain relationship between the ninth time window and the eighth time window includes at least one of the following:
   a start timing of the ninth time window is not earlier than a start timing of the eighth time window;
   an end timing of the ninth time window is not later than an end timing of the eighth time window;
   an interval between the start timing of the ninth time window and the start timing of the eighth time window satisfies a fourth time threshold condition;
   an interval between the end timing of the ninth time window and the start timing of the eighth time window satisfies a fifth time threshold condition;
   the activation time point is not earlier than a start timing of an Mth eighth time window, M is an integer greater than 0; and
   the deactivation time point is not later than an end timing of the Mth eighth time window, M is an integer greater than 0.

In an embodiment, according to the signal transceiving method provided by the present application, configuration information corresponding to the first transceiving mechanism includes a tenth time window, where the tenth time window is a time window for an aperiodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism includes an eighth time window and an eighth cycle; and
a time domain relationship between the tenth time window and the eighth time window includes at least one of the following:
   a start timing of the tenth time window is not earlier than a start timing of the eighth time window;
   an end timing of the tenth time window is not later than an end timing of the eighth time window;
   the end timing of the tenth time window is not later than a start timing of a data transmission;
   an interval between the start timing of the tenth time window and the start timing of the eighth time window satisfies a sixth time threshold condition;
   an interval between the end timing of the tenth time window and the start timing of the eighth time window satisfies a seventh time threshold condition; and
   an interval between the end timing of the tenth time window and the start timing of the data transmission satisfies an eighth time threshold condition.

In an embodiment, according to the signal transceiving method provided by the present application, configuration information corresponding to the first transceiving mechanism includes a seventh time window and a seventh cycle, where the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism includes an eleventh time window and an eleventh cycle, and information corresponding to the ninth transceiving mechanism includes a twelfth time window and a twelfth cycle;
the seventh cycle is a minimum value between the eleventh cycle and the twelfth cycle; and
a time domain relationship between the seventh time window and a time window corresponding to the minimum value includes at least one of the following:
   a start timing of the seventh time window is not earlier than a start timing of the time window corresponding to the minimum value;
   an end timing of the seventh time window is not later than an end timing of the time window corresponding to the minimum value;
   the end timing of the seventh time window is not later than a start timing of a data transmission;
   an interval between the start timing of the seventh time window and the start timing of the time window corresponding to the minimum value satisfies a ninth time threshold condition;
   an interval between the end timing of the seventh time window and the end timing of the time window corresponding to the minimum value satisfies a tenth time threshold condition; and
   an interval between the end timing of the seventh time window and the start timing of the data transmission satisfies an eleventh time threshold condition.

In an embodiment, according to the signal transceiving method provided by the present application, configuration information corresponding to the first transceiving mechanism includes a seventh time window and a seventh cycle, where the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism includes an eleventh time window and an eleventh cycle, and information corresponding to the ninth transceiving mechanism includes a twelfth time window and a twelfth cycle;
the seventh cycle is any cycle of the eleventh cycle and the twelfth cycle; and
a time domain relationship between the seventh time window and a time window corresponding to the any one cycle includes at least one of the following:
   a start timing of the seventh time window is not earlier than a start timing of the eleventh time window, or a start timing of the seventh time window is not earlier than a start timing of the twelfth time window;
   an end timing of the seventh time window is not later than an end timing of the eleventh time window, or an end timing of the seventh time window is not later than an end timing of the twelfth time window;
   the end timing of the seventh time window is not later than a start timing of a data transmission;
   an interval between the start timing of the seventh time window and the start timing of the eleventh time window satisfies a twelfth time threshold condition; or, an interval between the start timing of the seventh time window and the start timing of the twelfth time window satisfies a thirteenth time threshold condition;
   an interval between the end timing of the seventh time window and the end timing of the eleventh time window satisfies a fourteenth time threshold condition; or, an interval between the start timing of the seventh time window and the start timing of the twelfth time window satisfies a fifteenth time threshold condition; and
   an interval between the end timing of the seventh time window and the start timing of the data transmission satisfies a sixteenth time threshold condition.

In an embodiment, according to the signal transceiving method provided by the present application, configuration information corresponding to the first transceiving mechanism includes a ninth time window and a ninth cycle, where a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism includes an eleventh time window and an eleventh cycle, and information corresponding to the ninth transceiving mechanism includes a twelfth time window and a twelfth cycle; and
a time domain relationship between the ninth time window, the eleventh time window and the twelfth time window includes at least one of the following:
   a start timing of the ninth time window is not earlier than a first timing, where the first timing is an earliest start timing between a start timing of the eleventh time window and a start timing of the twelfth time window;
   an end timing of the ninth time window is not later than a second timing, where the second timing is a latest end timing between an end timing of the eleventh time window and an end timing of the twelfth time window;
   an interval between the start timing of the ninth time window and a first value satisfies a seventeenth time threshold condition, where the first value is an interval between the start timing of the eleventh time window and the start timing of the twelfth time window;
   an interval between the end timing of the ninth time window and a second value satisfies an eighteenth time threshold condition, where the second value is an interval between the end timing of the eleventh time window and the end timing of the twelfth time window;
   the activation time point is not earlier than a third value, where the third value is a start timing of an Mth eleventh time window, or a start timing of an Mth twelfth time window, M is an integer greater than 0; and
   the deactivation time point is not later than a fourth value, where the fourth value is an end timing of the Mth eleventh time window, or an end timing of the Mth twelfth time window, M is an integer greater than 0.

In an embodiment, according to the signal transceiving method provided by the present application, configuration information corresponding to the first transceiving mechanism includes a tenth time window, where the tenth time window is a time window for an aperiodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism includes an eleventh time window and an eleventh cycle, and information corresponding to the ninth transceiving mechanism includes a twelfth time window and a twelfth cycle;
the tenth time window is any one of the eleventh time window and the twelfth time window; and
a time domain relationship between the tenth time window, the eleventh time window and the twelfth time window includes at least one of the following:
   a start timing of the tenth time window is not earlier than a start timing of the eleventh time window; or, a start timing of the tenth time window is not earlier than a start timing of the twelfth time window;
   an end timing of the tenth time window is not later than an end timing of the eleventh time window; or, an end timing of the tenth timing is not later than an end timing of the twelfth time window;
   the end timing of the tenth time window is not later than a start timing of a data transmission;
   an interval between the start timing of the tenth time window and the start timing of the eleventh time window satisfies a nineteenth time threshold condition; or, an interval between the start timing of the tenth time window and the start timing of the twelfth time window satisfies a twentieth time threshold condition;
   an interval between the end timing of the tenth time window and the end timing of the eleventh time window satisfies a twenty-first time threshold condition; or, an interval between the start timing of the tenth time window and the start timing of the twelfth time window satisfies a twenty-second time threshold condition; and
   an interval between the end timing of the tenth time window and the start timing of the data transmission satisfies a twenty-third time threshold condition.

In an embodiment, according to the signal transceiving method provided by the present application, the method further includes:
performing signal transceiving based on the configuration information.

An embodiment of the present application further provides a signal transceiving method, applied to a terminal device, including:
receiving configuration information used for signal transceiving, where the configuration information includes information corresponding to at least two transceiving mechanisms, and the at least two transceiving mechanisms include a first transceiving mechanism representing CSI measurement and/or reporting; and
performing signal transceiving based on the configuration information.

In an embodiment, according to the signal transceiving method provided by the present application, the at least two transceiving mechanisms further include one or more of the following:
a second transceiving mechanism representing a PDCCH monitoring window or opportunity for a dedicated service;
a third transceiving mechanism representing a discontinuous reception (DRX);
a fourth transceiving mechanism representing a wake-up signal (WUS);
a fifth transceiving mechanism representing a PDCCH skipping; and
a sixth transceiving mechanism representing a search space switching.

In an embodiment, according to the signal transceiving method provided by the present application, where
information corresponding to the second transceiving mechanism includes a first time window, or a first time window and a first cycle, where the first time window is the PDDCH monitoring window or opportunity for the dedicated service, and the first cycle is a cycle for the PDDCH monitoring window or opportunity for the dedicated service;
information corresponding to the third transceiving mechanism includes a second time window and a second cycle, and/or a third time window and a third cycle, where the second cycle is a long DRX cycle, the second time window is a DRX activation window within the long DRX cycle, the third cycle is a short DRX cycle, and the third time window is a DRX activation window within the short DRX cycle;
information corresponding to the fourth transceiving mechanism includes a fourth time window and a fourth cycle, where the fourth time window is a WUS activation window, and the fourth cycle is a WUS cycle;
information corresponding to the fifth transceiving mechanism includes a fifth time window and a fifth cycle, where the fifth time window is a PDCCH skipping activation window, and the fifth cycle is a PDCCH skipping cycle; and
information corresponding to the sixth transceiving mechanism includes a sixth time window and a sixth cycle, where the sixth time window is a search space activation window, and the sixth cycle is a search space monitoring cycle.

In an embodiment, according to the signal transceiving method provided by the present application, configuration information corresponding to the first transceiving mechanism includes a seventh time window and a seventh cycle, where the seventh time window is a time window for a periodic CSI measurement and/or reporting, and the seventh cycle is a reporting cycle for the periodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism includes an eighth time window and an eighth cycle;
the seventh cycle is N times the eighth cycle, where in case that the seventh transceiving mechanism is the third transceiving mechanism, N is an integer greater than 1; and in case that the seventh transceiving mechanism is any one of the second transceiving mechanism, the fourth transceiving mechanism, the fifth transceiving mechanism and the sixth transceiving mechanism, N is an integer greater than or equal to 1; and
a time domain relationship between the seventh time window and the eighth time window includes at least one of the following:
   a start timing of the seventh time window is not earlier than a start timing of N eighth time windows;
   an end timing of the seventh time window is not later than an end timing of N eighth time windows;
   the end timing of the seventh time window is not later than a start timing of a data transmission;
   an interval between the start timing of the seventh time window and the start timing of the N eighth time windows satisfies a first time threshold condition;
   an interval between the end timing of the seventh time window and the end timing of the N eighth time windows satisfies a second time threshold condition; and
   an interval between the end timing of the seventh time window and the start timing of the data transmission satisfies a third time threshold condition.

In an embodiment, according to the signal transceiving method provided by the present application, configuration information corresponding to the first transceiving mechanism includes a ninth time window and a ninth cycle, where a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism includes the eighth time window and the eighth cycle; and
a time domain relationship between the ninth time window and the eighth time window includes at least one of the following:
   a start timing of the ninth time window is not earlier than a start timing of the eighth time window;
   an end timing of the ninth time window is not later than an end timing of the eighth time window;
   an interval between the start timing of the ninth time window and the start timing of the eighth time window satisfies a fourth time threshold condition;
   an interval between the end timing of the ninth time window and the start timing of the eighth time window satisfies a fifth time threshold condition;
   the activation time point is not earlier than a start timing of an Mth eighth time window, M is an integer greater than 0; and
   the deactivation time point is not later than an end timing of the Mth eighth time window, M is an integer greater than 0.

In an embodiment, according to the signal transceiving method provided by the present application, configuration information corresponding to the first transceiving mechanism includes a tenth time window, where the tenth time window is a time window for an aperiodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism includes an eighth time window and an eighth cycle; and
a time domain relationship between the tenth time window and the eighth time window includes at least one of the following:
   a start timing of the tenth time window is not earlier than a start timing of the eighth time window;
   an end timing of the tenth time window is not later than an end timing of the eighth time window;
   the end timing of the tenth time window is not later than a start timing of a data transmission;
   an interval between the start timing of the tenth time window and the start timing of the eighth time window satisfies a sixth time threshold condition;
   an interval between the end timing of the tenth time window and the start timing of the eighth time window satisfies a seventh time threshold condition; and
   an interval between the end timing of the tenth time window and the start timing of the data transmission satisfies an eighth time threshold condition.

In an embodiment, according to the signal transceiving method provided by the present application, configuration information corresponding to the first transceiving mechanism includes a seventh time window and a seventh cycle, where the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism includes an eleventh time window and an eleventh cycle, and information corresponding to the ninth transceiving mechanism includes a twelfth time window and a twelfth cycle;
the seventh cycle is a minimum value between the eleventh cycle and the twelfth cycle; and
a time domain relationship between the seventh time window and a time window corresponding to the minimum value includes at least one of the following:
   a start timing of the seventh time window is not earlier than a start timing of the time window corresponding to the minimum value;
   an end timing of the seventh time window is not later than an end timing of the time window corresponding to the minimum value;
   the end timing of the seventh time window is not later than a start timing of a data transmission;
   an interval between the start timing of the seventh time window and the start timing of the time window corresponding to the minimum value satisfies a ninth time threshold condition;
   an interval between the end timing of the seventh time window and the end timing of the time window corresponding to the minimum value satisfies a tenth time threshold condition; and
   an interval between the end timing of the seventh time window and the start timing of the data transmission satisfies an eleventh time threshold condition.

In an embodiment, according to the signal transceiving method provided by the present application, configuration information corresponding to the first transceiving mechanism includes a seventh time window and a seventh cycle, where the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism includes an eleventh time window and an eleventh cycle, and information corresponding to the ninth transceiving mechanism includes a twelfth time window and a twelfth cycle;
the seventh cycle is any cycle of the eleventh cycle and the twelfth cycle; and
a time domain relationship between the seventh time window and a time window corresponding to the any one cycle includes at least one of the following:
   a start timing of the seventh time window is not earlier than a start timing of the eleventh time window, or a start timing of the seventh time window is not earlier than a start timing of the twelfth time window;
   an end timing of the seventh time window is not later than an end timing of the eleventh time window, or an end timing of the seventh time window is not later than an end timing of the twelfth time window;
   the end timing of the seventh time window is not later than a start timing of a data transmission;
   an interval between the start timing of the seventh time window and the start timing of the eleventh time window satisfies a twelfth time threshold condition; or, an interval between the start timing of the seventh time window and the start timing of the twelfth time window satisfies a thirteenth time threshold condition;
   an interval between the end timing of the seventh time window and the end timing of the eleventh time window satisfies a fourteenth time threshold condition; or, an interval between the start timing of the seventh time window and the start timing of the twelfth time window satisfies a fifteenth time threshold condition; and
   an interval between the end timing of the seventh time window and the start timing of the data transmission satisfies a sixteenth time threshold condition.

In an embodiment, according to the signal transceiving method provided by the present application, configuration information corresponding to the first transceiving mechanism includes a ninth time window and a ninth cycle, where a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism includes an eleventh time window and an eleventh cycle, and information corresponding to the ninth transceiving mechanism includes a twelfth time window and a twelfth cycle; and
a time domain relationship between the ninth time window, the eleventh time window and the twelfth time window includes at least one of the following:
   a start timing of the ninth time window is not earlier than a first timing, where the first timing is an earliest start timing between a start timing of the eleventh time window and a start timing of the twelfth time window;
   an end timing of the ninth time window is not later than a second timing, where the second timing is a latest end timing between an end timing of the eleventh time window and an end timing of the twelfth time window;
   an interval between the start timing of the ninth time window and a first value satisfies a seventeenth time threshold condition, where the first value is an interval between the start timing of the eleventh time window and the start timing of the twelfth time window;
   an interval between the end timing of the ninth time window and a second value satisfies an eighteenth time threshold condition, where the second value is an interval between the end timing of the eleventh time window and the end timing of the twelfth time window;
   the activation time point is not earlier than a third value, where the third value is a start timing of an Mth eleventh time window, or a start timing of an Mth twelfth time window, M is an integer greater than 0; and
   the deactivation time point is not later than a fourth value, where the fourth value is an end timing of the Mth eleventh time window, or an end timing of the Mth twelfth time window, M is an integer greater than 0.

An embodiment of the present application further provides a network device, including a memory, a transceiver and a processor,
where the memory is used for storing a computer program; the transceiver is used for transmitting and receiving data under control of the processor; and the processor is used for reading the computer program stored in the memory and performing the steps of the above-mentioned signal transceiving method.

An embodiment of the present application further provides a terminal device, including a memory, a transceiver and a processor,
where the memory is used for storing a computer program; the transceiver is used for transmitting and receiving data under control of the processor; and the processor is used for reading the computer program stored in the memory and performing the steps of the above-mentioned signal transceiving method.

An embodiment of the present application further provides a signal transceiving apparatus, applied to a network device, including:
a configuring unit, used for generating configuration information used for signal transceiving, where the configuration information includes information corresponding to at least two transceiving mechanisms, and the at least two transceiving mechanisms include a first transceiving mechanism representing CSI measurement and/or reporting; and
a transmitting unit, used for transmitting the configuration information to a terminal, to make the terminal perform signal transceiving based on the configuration information.

An embodiment of the present application further provides a signal transceiving apparatus, applied to a terminal device, including:
a receiving unit, used for receiving configuration information used for signal transceiving, where the configuration information includes information corresponding to at least two transceiving mechanisms, and the at least two transceiving mechanisms include a first transceiving mechanism representing channel state information (CSI) measurement and/or reporting; and
a signal transceiving unit, used for performing signal transceiving based on the configuration information.

An embodiment of the present application further provides a processor-readable storage medium storing computer programs that, when executed by a processor, cause the processor to perform the steps of the above-mentioned signal transceiving method.

An embodiment of the present application further provides a processor-readable storage medium storing computer programs that, when executed by a processor, cause the processor to perform the steps of the above-mentioned signal transceiving method.

In the signal transceiving methods and apparatuses, the devices and the storage mediums, when the network device configures the CSI measurement and/or reporting for the terminal, other transceiving mechanisms are further configured, such as the PDCCH monitoring window or opportunity for the dedicated service, the DRX, WUS or PDCCH skipping, the search space switching, etc., which solves a problem of coexistence of multiple mechanisms, allows the CSI measurement and/or reporting to be performed timely, improves user throughput, and reduces latency, thereby improving system performance.

### BRIEF DESCRIPTION OF DRAWINGS

In order to more clearly illustrate the solutions of the embodiments according to the present application or the related art, the accompanying drawings used in the description of the embodiments or the related art are briefly introduced below. It should be noted that the drawings in the following description are only some embodiments of the present application. For those of ordinary skill in the art, other drawings may be obtained according to these drawings without creative effort.
FIG. 1 is a schematic diagram of a discontinuous reception (DRX) mechanism;
FIG. 2 is a schematic diagram of an extended reality (XR) dedicated physical downlink control channel (PDCCH) monitoring window;
FIG. 3 is a schematic diagram of a channel state information (CSI) reporting and measurement mechanism;
FIG. 4 is a first schematic flowchart of a signal transceiving method according to an embodiment of the present application;
FIG. 5 is a schematic diagram of a configuration for a PDCCH monitoring window or opportunity of a dedicated service according to an embodiment of the present application;
FIG.6 is a schematic diagram of a configuration for a DRX according to an embodiment of the present application;
FIG. 7 is a schematic diagram of a configuration for a wake-up signal (WUS) according to an embodiment of the present application;
FIG. 8 is a schematic diagram of a configuration for a PDDCH skipping according to an embodiment of the present application;
FIG. 9 is a schematic diagram of a configuration for a search space switching according to an embodiment of the application;
FIG. 10 is a schematic diagram of a configuration for a periodic CSI measurement and/or reporting according to an embodiment of the present application;
FIG. 11 is a schematic diagram of a configuration for a semi-persistent CSI measurement and/or reporting according to an embodiment of the present application;
FIG. 12 is a schematic diagram of a configuration for an aperiodic CSI measurement and/or reporting according to an embodiment of the present application;
FIG. 13 is a second schematic flowchart of a signal transceiving method according to an embodiment of the present application;
FIG. 14 is a first schematic diagram of a configuration for CSI reporting and/or measurement mechanism when there is a PDCCH monitoring window or opportunity of a dedicated service according to an embodiment of the present application;
FIG. 15 is a second schematic diagram of a configuration for CSI reporting and/or measurement mechanism when there is a PDCCH monitoring window or opportunity of a dedicated service according to an embodiment of the present application;
FIG. 16 is a third schematic diagram of a configuration for CSI reporting and/or measurement mechanism when there is a PDCCH monitoring window or opportunity of a dedicated service according to an embodiment of the present application;
FIG. 17 is a fourth schematic diagram of a configuration for CSI reporting and/or measurement mechanism when there is a PDCCH monitoring window or opportunity of a dedicated service according to an embodiment of the present application;
FIG. 18 is a fifth schematic diagram of a configuration for CSI reporting and/or measurement mechanism when there is a PDCCH monitoring window or opportunity of a dedicated service according to an embodiment of the present application;
FIG. 19 is a sixth schematic diagram of a configuration for CSI reporting and/or measurement mechanism when there is a PDCCH monitoring window or opportunity of a dedicated service according to an embodiment of the present application;
FIG. 20 is a first schematic structural diagram of a signal transceiving apparatus according to an embodiment of the present application;
FIG. 21 is a second schematic structural diagram of a signal transceiving apparatus according to an embodiment of the present application;
FIG. 22 is a schematic structural diagram of a network device according to an embodiment of the present application; and
FIG. 23 is a schematic structural diagram of a terminal device according to an embodiment of the present application.

### DETAILED DESCRIPTION OF THE EMBODIMENTS

The term "and/or" in the embodiments of the present application describes three situations of the correlation objects. For example, A and/or B may represent three situations: only A, A and B together, and only B. The character "/" generally represents that the two objects on two sides have a relationship of "or".

The term "multiple" in the embodiments of the present application refers to two or more, and other quantifiers are similar to it.

The solutions of the embodiments according to the present application are clearly described below in combination with the accompanying drawings in the embodiments of the present application. It should be noted that the described embodiments are some embodiments of the present application, rather than all the embodiments. Based on the embodiments of the present application, all other embodiments obtained by those of ordinary skill in the art without creative effort are within the scope of protection of the present application.

The terms in the embodiments of the present application are described below.

### 1) Discontinuous reception (DRX) mechanism.

When a user configures a DRX group, a terminal performs a discontinuous physical downlink control channel (PDCCH) monitoring on all serving cells.

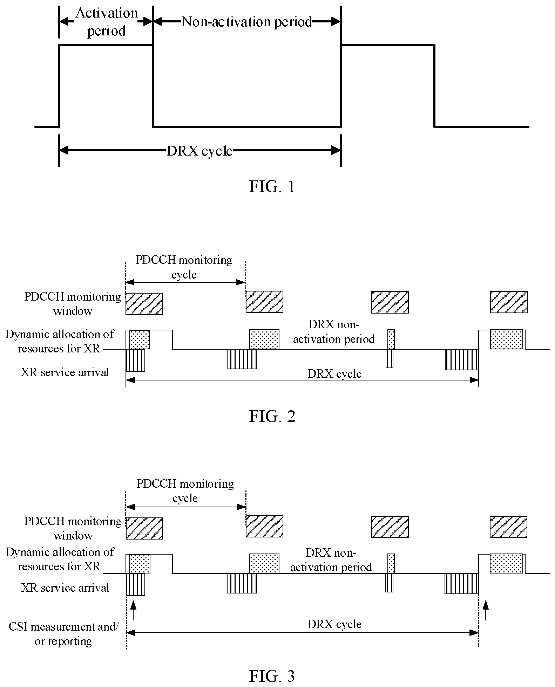

As shown in FIG. 1, during a DRX cycle, the terminal only monitors PDCCH during an activation period (i.e., DRX on duration), and during a non-activation period (i.e., DRX off duration), the terminal does not receive other PDCCHs except scheduling broadcast signaling to reduce power consumption, that is, the terminal enters a sleep mode. The activation period refers to a period within which the following timers have not expired: a DRX activation period timer (drx-onDuration Timer), a DRX non-activation period timer (drx-Inactivity Timer), a DRX downlink retransmission timer (drx-Retransmission Timer DL), a DRX uplink retransmission timer (drx-Retransmission Timer UL), a random-access contention resolution timer (ra-Contention Resolution Timer), a message B response window (msbB-Response Window), etc.

The DRX mechanism mainly does not monitor the PDCCH scrambled by following radio network temporary identifier (RNTI) during the non-activation period, including: a cell-RNTI (C-RNTI), a configured scheduling-RNTI (CS-RNTI), an interrupted transmission indication-RNTI (INT-RNTI), a slot format indication-RNTI (SFI-RNTI), a semi persistent-channel state information-RNTI (SP-CSI-RNTI), a transmit power control physical uplink control channel-RNTI (TPC-PUCCH-RNTI), etc. The C-RNTI is mainly used for scrambling downlink control information (DCI) for data scheduling.

### 2) Extended reality (XR) service.

XR is one of the most important type of media application in the 5th generation (5G) mobile communication system, which is represented by augmented reality (AR), mixed reality (MR), virtual reality (VR), etc., and creates a real and virtual combined environment and a corresponding human-computer interaction through computer technology and wearable devices. The degree of virtuality from AR to VR changes from weak to strong, that is, from AR which supports partial perception through an input by sensors to VR which supports complete virtuality to human senses. Illusions of human vision, hearing or environment are presented by XR devices.

According to research on the XR service based on system architecture (SA) 2, SA4, and radio access network (RAN) 1, the XR service has an approximately periodic transmission characteristic, that is, an XR service source generates a corresponding data packet at a certain refresh rate. For example, a refresh rate of 60 frames (60 FPS) means 60 data frames are generated in every second, and an interval between two of the data frames is 16.67 millisecond; and a refresh rate of 120 frames (120 FPS) means 120 data frames are generated in every second, and an interval between two of the data frames is 8.33 millisecond.

Video streaming is one of the main services in the XR service. H.264 is the most common video compression standard. In the H.264 compression standard, an I-frame, a P-frame, and a B-frame are used to represent a transmitted video picture. The I-frame, also known as an intra-frame coded frame, is an independent frame that carries all its own information, which may be decoded independently without referring to other pictures, and may be simply understood as a static picture. The first frame in a video sequence is an I-frame in general because the I-frame is a keyframe. The P-frame, also known as interframe predictive coded frame, needs to refer to a previous I-frame for encoding. The P-frame represents a difference between a current frame and a previous frame, where the previous frame may be an I-frame or a P-frame. When decoding the P-frame, the difference defined in this frame needs to be superimposed with a previous cached picture to generate a final picture. The P-frame generally occupies fewer data bits than the I-frame, however, since the P-frame has a complex dependency on previous reference P-frame and I-frame, the P-frame is very sensitive to transmission errors. The B-frame is also known as a bidirectional predictive coded frame, that is, the B-frame records a difference between current frame and a previous frame and a next frame. That is, to decode the B-frame, not only the previous cached picture needs to be obtained, but also a subsequent decoded picture is needed, and the final picture is obtained by superimposing the previous cached picture, the subsequent picture, and data of current frame. The B-frame has a high compression rate, but requires higher decoding performance.

### 3) PDCCH monitoring window or opportunity for a dedicated service

Since the XR service has a quasi-periodic characteristic, if the DRX cycle configuration cannot match the XR service, unnecessary waiting for transmission delay will be introduced. For this reason, the PDCCH monitoring window or opportunity for the dedicated service is introduced. Scheduling information of the dedicated service is configured with a corresponding monitoring window or a monitoring opportunity, and a corresponding data dynamic scheduling DCI monitoring may be performed under a DRX mechanism based on a service characteristic without being limited by the DRX. An XR dedicated PDCCH monitoring window is shown in FIG. 2.

### 4) Channel state information (CSI) measurement and/or reporting

In order to ensure link transmission performance, the terminal needs to perform the CSI measurement and/or reporting, so that the terminal maintains or improves the link transmission performance, for example, the terminal needs to perform obtaining channel state information, beam management, time-frequency tracking, and mobility management. Periodic, aperiodic, and semi-persistent CSI reporting are supported in the CSI measurement and/or reporting.

The periodic CSI measurement and/or reporting is that if a CSI time domain type in a CSI reporting configuration is set to periodic, the terminal reports the CSI periodically. A feedback cycle and a slot offset of the periodic CSI reporting are configured in a CSI reporting setting. In the periodic CSI reporting, only a periodic channel state indicator-reference signal (CSI-RS) may be used for channel measurement, and only a periodic channel state information-interference measurement (CSI-IM) may be used for interference measurement.

The semi-persistent CSI measurement and/or reporting is between the periodic CSI reporting and the aperiodic CSI reporting, and the CSI reporting is performed at a certain cycle after the CSI reporting is activated and before it is deactivated. In the semi-persistent CSI (SP-CSI) reporting, the periodic CSI-RS or a semi-persistent CSI-RS may be used for channel measurement, and correspondingly, the periodic CSI-IM or a semi-persistent CSI-IM may be used for interference measurement.

The aperiodic CSI measurement and/or reporting is that the reporting is configured and triggered in a manner that a medium access control-core element (MAC-CE) is combined with DCI triggering, and reported through a physical uplink shared channel (PUSCH). A base station configures multiple CSI trigger states using radio resource control (RRC) signaling, and each CSI trigger state may include one or multiple CSI reporting settings. A CSI request field in the DCI indicates a trigger state, and the terminal reports CSIs set on all CSIs corresponding to the trigger state. A periodic, semi-persistent, or aperiodic CSI-RS may be used for channel measurement for the aperiodic CSI reporting, and correspondingly, periodic, semi-persistent, or aperiodic CSI-IM may be used for interference measurement.

Further, as shown in FIG. 3, considering a power saving requirement, the terminal will further configure the DRX and perform corresponding PDCCH monitoring and transmission during a DRX activation period, as well as the CSI reporting; and during a DRX non-activation period, no corresponding operation is performed.

However, if the terminal is only configured with the PDCCH monitoring window or opportunity for the dedicated service, the CSI measurement and/or reporting cannot accurately match the PDCCH monitoring window;
if the terminal is configured with the DRX and the PDCCH monitoring window or opportunity for the dedicated service, the CSI measurement and/or reporting is only performed during the DRX activation period, which will affect data transmission performance in the PDCCH monitoring window for the dedicated service during the DRX non-activation period;
if the terminal is configured with a wake-up signal (WUS), the DRX and the PDCCH monitoring window or opportunity for the dedicated service, in case that the WUS indicates the terminal to wake up in the DRX to which it belongs, the CSI measurement and/or reporting is only performed during the DRX activation period, which will affect the data transmission performance in the PDCCH monitoring window for the dedicated service during the DRX non-activation period; in case that the WUS indicates the terminal to sleep in the DRX, performance of the PDCCH monitoring window or opportunity for the dedicated service will be severely degraded or even unable to work due to a lack of CSI information;
if the terminal is configured with the WUS, the DRX, the PDCCH monitoring window or opportunity for the dedicated service, and a PDCCH skipping, in case that the WUS indicates the terminal to wake up in the DRX to which it belongs, the CSI measurement and/or reporting is only performed during the DRX activation period, which will affect the data transmission performance in the PDCCH monitoring window for the dedicated service during the DRX non-activation period; in case that the WUS indicates the terminal to sleep in the DRX, the performance of the PDCCH monitoring window or opportunity for the dedicated service will be severely degraded or even unable to work due to a lack of CSI information.

In the signal transceiving methods and apparatuses provided by embodiments of the present application, the devices and the storage mediums, when a network device configures the CSI measurement and/or reporting for the terminal, other transceiving mechanisms are further configured, such as the PDCCH monitoring window or opportunity of the dedicated service, the DRX, the WUS or PDCCH skipping, a search space switching, etc., which solves a problem of coexistence of multiple mechanisms, allows the CSI measurement and/or reporting to be performed timely, improves user throughput, and reduces latency, thereby improving system performance.

The methods and the apparatuses are based on the same conception in the embodiments of the present application. Since the principles of the methods and the apparatuses to solve the problems are similar, the implementation of the apparatuses and methods may be referred to each other, and the similar part is not repeated.

The solutions provided by the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal through one or more sectors on the air interface in the access network, or other names. The network device may be used for exchanging received air frames with internet protocol (IP) packets, and acting as a router between the wireless terminal and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A network device and a terminal may each use one or more antennas for multi input multi output (MIMO) transmission. MIMO transmission may be single user MIMO (SU-MIMO) or multi user MIMO (MU-MIMO). Depending on the state and number of antenna combinations, MIMO transmission may be 2D-MIMO, 3D-MIMO, FD-MIMO or massive-MIMO, or it may be diversity transmission, precoding transmission or beamforming transmission, etc.

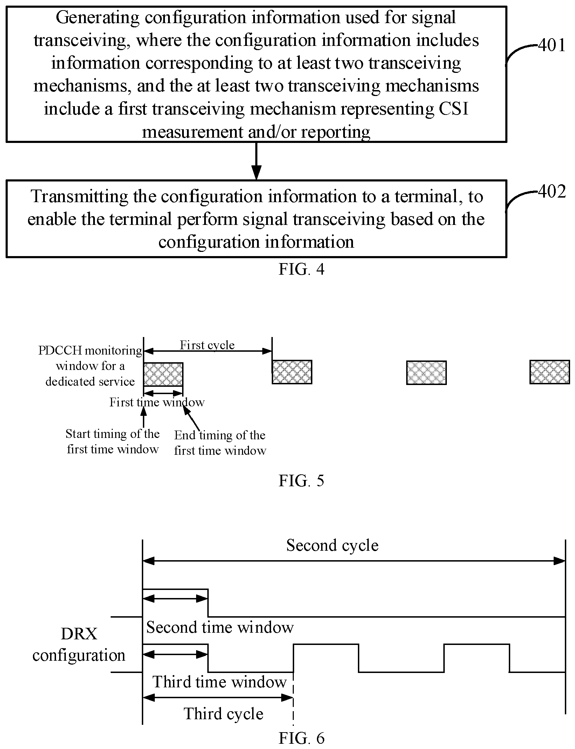

FIG. 4 is a first schematic flowchart of a signal transceiving method according to an embodiment of the present application, the signal transceiving method may be applied to a network device such as a base station. As shown in FIG. 4, the signal transceiving method may include the following steps.

Step 401: generating configuration information used for signal transceiving, where the configuration information includes information corresponding to at least two transceiving mechanisms, and the at least two transceiving mechanisms include a first transceiving mechanism representing channel state information (CSI) measurement and/or reporting.

Besides information of CSI measurement and/or reporting configured by the network device for a terminal, the configuration information may further include information of other transceiving mechanisms configured by the network device for the terminal. For example, a physical downlink control channel (PDDCH) monitoring window or opportunity for a dedicated service, a discontinuous reception (DRX), a wake-up signal (WUS), a PDCCH skipping, a search space switching, etc. The dedicated service may be an extended reality (XR) service.

Step 402: transmitting the configuration information to a terminal, to make the terminal perform signal transceiving based on the configuration information.

Since besides the information of CSI measurement and/or reporting configured for the terminal, the configuration information may further include the information of other transceiving mechanisms configured for the terminal, after receiving the configuration information, the terminal may perform CSI measurement and/or reporting based on the configuration information without affecting other transceiving mechanisms.

It can be seen from the above embodiment that, by generating the configuration information for the CSI measurement and/or reporting and other transceiving mechanisms, and transmitting the configuration information to the terminal, the terminal may perform the CSI measurement and/or reporting based on the configuration information without affecting other transceiving mechanisms, which solves the problem of coexistence of multiple mechanisms, allows the CSI measurement and/or reporting to be performed timely, improves the user throughput, and reduces the latency, thereby improving the system performance.

In an embodiment, the at least two transceiving mechanisms further includes one or more of the following:
a second transceiving mechanism representing a PDCCH monitoring window or opportunity for a dedicated service;
a third transceiving mechanism representing a DRX;
a fourth transceiving mechanism representing a WUS;
a fifth transceiving mechanism representing a PDCCH skipping; and
a sixth transceiving mechanism representing a search space switching.

Besides the information of CSI measurement and/or reporting, the network device may further configure the information of other transceiving mechanisms for the terminal. The other transceiving mechanisms may include but are not limited to the following transceiving mechanisms: the PDCCH monitoring window or opportunity for the dedicated service, the DRX, the WUS, the PDCCH skipping, the search space switching, etc.

It can be seen from the above embodiment that, besides the information of CSI measurement and/or reporting, the network device may further configure the information of other transceiving mechanisms for the terminal, such as the PDCCH monitoring window or opportunity for the dedicated service, the DRX, the WUS, the PDCCH skipping, the search space switching, etc., which solves the problem of coexistence of multiple mechanisms, allows the CSI measurement and/or reporting to be performed timely, improves the user throughput, and reduces the latency, thereby improving the system performance.

In an embodiment, information corresponding to the second transceiving mechanism includes a first time window, or a first time window and a first cycle, where the first time window is the PDDCH monitoring window or opportunity for the dedicated service, and the first cycle is a cycle for the PDDCH monitoring window or opportunity for the dedicated service;
information corresponding to the third transceiving mechanism includes a second time window and a second cycle, and/or a third time window and a third cycle, where the second cycle is a long DRX cycle, the second time window is a DRX activation window within the long DRX cycle, the third cycle is a short DRX cycle, and the third time window is a DRX activation window within the short DRX cycle;
information corresponding to the fourth transceiving mechanism includes a fourth time window and a fourth cycle, where the fourth time window is a WUS activation window, and the fourth cycle is a WUS cycle;
information corresponding to the fifth transceiving mechanism includes a fifth time window and a fifth cycle, where the fifth time window is a PDCCH skipping activation window, and the fifth cycle is a PDCCH skipping cycle; and
information corresponding to the sixth transceiving mechanism includes a sixth time window and a sixth cycle, where the sixth time window is a search space activation window, and the sixth cycle is a search space monitoring cycle.

As shown in FIG. 5, the first time window is the PDCCH monitoring window or opportunity for the dedicated service, and the first cycle is the cycle of the PDCCH monitoring window or opportunity for the dedicated service. The dedicated service may be the XR service.

As shown in FIG. 6, the second cycle may be the long DRX cycle, the second time window may be the DRX activation window within the long DRX cycle, the third cycle may be the short DRX cycle, and the third time window may be the DRX activation window within the short DRX cycle. The time lengths of the second time window and the third time window may be the same or different.

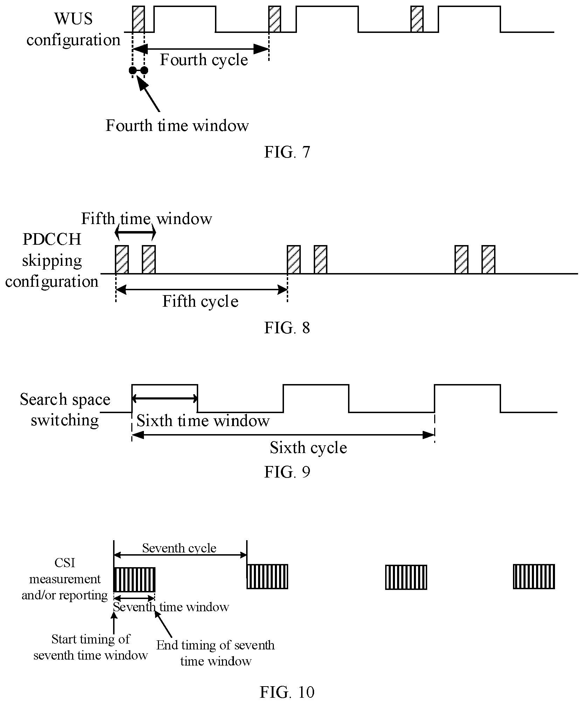

As shown in FIG. 7, the fourth time window is the WUS activation window, and the fourth cycle is the WUS cycle.

As shown in FIG. 8, the fifth time window is the PDCCH skipping activation window, and the fifth cycle is the PDCCH skipping cycle.

As shown in FIG. 9, the sixth time window is the search space activation window, and the sixth cycle is the search space monitoring cycle.

It can be seen from the above embodiment that, besides the information of CSI measurement and/or reporting, the network device may further configure time windows and cycles of other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the CSI measurement and/or reporting to be performed timely, improves the user throughput, and reduces the latency, thereby improving the system performance.

In an embodiment, configuration information corresponding to the first transceiving mechanism includes a seventh time window and a seventh cycle, where the seventh time window is a time window for a periodic CSI measurement and/or reporting, and the seventh cycle is a reporting cycle for the periodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism includes an eighth time window and an eighth cycle;
the seventh cycle is N times the eighth cycle, where in case that the seventh transceiving mechanism is the third transceiving mechanism, N is an integer greater than 1; and in case that the seventh transceiving mechanism is any one of the second transceiving mechanism, the fourth transceiving mechanism, the fifth transceiving mechanism and the sixth transceiving mechanism, N is an integer greater than or equal to 1; and
a time domain relationship between the seventh time window and the eighth time window includes at least one of the following:
   a start timing of the seventh time window is not earlier than a start timing of N eighth time windows;
   an end timing of the seventh time window is not later than an end timing of N eighth time windows;
   the end timing of the seventh time window is not later than a start timing of a data transmission;
   an interval between the start timing of the seventh time window and the start timing of the N eighth time windows satisfies a first time threshold condition;
   an interval between the end timing of the seventh time window and the end timing of the N eighth time windows satisfies a second time threshold condition; and
   an interval between the end timing of the seventh time window and the start timing of the data transmission satisfies a third time threshold condition.

As shown in FIG. 10, the seventh time window is the time window for the periodic CSI measurement and/or reporting, and the seventh cycle is the reporting cycle for the periodic CSI measurement and/or reporting.

The eighth time window and the eighth cycle in the embodiments of the application may represent any of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It can be seen from the above embodiment that, besides the information of periodic CSI measurement and/or reporting, the network device may further configure a time window and a cycle of any other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the periodic CSI measurement and/or reporting to be performed, improves the user throughput, and reduces the latency, thereby improving the system performance.

In an embodiment, the configuration information corresponding to the first transceiving mechanism includes a ninth time window and a ninth cycle, where a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
the seventh transceiving mechanism is used for representing any one of the second transceiving mechanism, the third transceiving mechanism, the fourth transceiving mechanism, the fifth transceiving mechanism, and the sixth transceiving mechanism; the information corresponding to the seventh transceiving mechanism includes an eighth time window and an eighth cycle; and
a time domain relationship between the ninth time window and the eighth time window includes at least one of the following:
   a start timing of the ninth time window is not earlier than a start timing of the eighth time window;
   an end timing of the ninth time window is not later than an end timing of the eighth time window;
   an interval between the start timing of the ninth time window and the start timing of the eighth time window satisfies a fourth time threshold condition;
   an interval between the end timing of the ninth time window and the start timing of the eighth time window satisfies a fifth time threshold condition;
   the activation time point is not earlier than a start timing of an Mth eighth time window, M is an integer greater than 0; and
   the deactivation time point is not later than an end timing of the Mth eighth time window, M is an integer greater than 0.

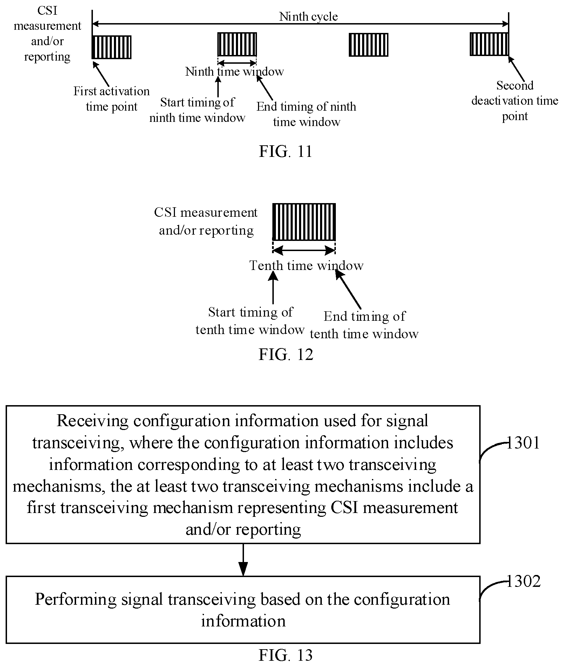

As shown in FIG. 11, a start point of the ninth cycle is a first activation time point of the semi-persistent CSI measurement and/or reporting, an end point of the ninth cycle is a second deactivation time point of the semi-persistent CSI measurement and/or reporting, and the ninth time window is an activation time window within the ninth cycle.

The eighth time window and the eighth cycle in the embodiments of the application may represent any of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It can be seen from the above embodiment that, besides the information of semi-persistent CSI measurement and/or reporting, the network device may further configure the time window and the cycle of any other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the semi-persistent CSI measurement and/or reporting to be performed, improves the user throughput, and reduces the latency, thereby improving the system performance.

In an embodiment, the configuration information corresponding to the first transceiving mechanism includes a tenth time window, where the tenth time window is a time window for an aperiodic CSI measurement and/or reporting;
the seventh transceiving mechanism is used for representing any one of the second transceiving mechanism, the third transceiving mechanism, the fourth transceiving mechanism, the fifth transceiving mechanism, and the sixth transceiving mechanism; the information corresponding to the seventh transceiving mechanism includes an eighth time window and an eighth cycle; and
a time domain relationship between the tenth time window and the eighth time window includes at least one of the following:
   a start timing of the tenth time window is not earlier than the start timing of the eighth time window;
   an end timing of the tenth time window is not later than the end timing of the eighth time window;
   the end timing of the tenth time window is not later than the start timing of the data transmission;
   an interval between the start timing of the tenth time window and the start timing of the eighth time window satisfies a sixth time threshold condition;
   an interval between the end timing of the tenth time window and the start timing of the eighth time window satisfies a seventh time threshold condition; and
   an interval between the end timing of the tenth time window and the start timing of the data transmission satisfies an eighth time threshold condition.

As shown in FIG. 12, the tenth time window is the time window of the aperiodic CSI measurement and/or reporting.

The eighth time window and the eighth cycle in the embodiments of the application may represent any of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It can be seen from the above embodiment that, besides the information of aperiodic CSI measurement and/or reporting, the network device may further configure the time window and the cycle of any other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves a problem of coexistence of two mechanisms, allows the aperiodic CSI measurement and/or reporting to be performed, improves the user throughput, and reduces the latency, thereby improving the system performance.

In an embodiment, the configuration information corresponding to the first transceiving mechanism includes the seventh time window and the seventh cycle, where the seventh time window is the time window for the periodic CSI measurement and/or reporting, and the seventh cycle is the reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism includes an eleventh time window and an eleventh cycle, and information corresponding to the ninth transceiving mechanism includes a twelfth time window and a twelfth cycle;
the seventh cycle is a minimum value between the eleventh cycle and the twelfth cycle; and
a time domain relationship between the seventh time window and a time window corresponding to the minimum value includes at least one of the following:
   the start timing of the seventh time window is not earlier than a start timing of the time window corresponding to the minimum value;
   the end timing of the seventh time window is not later than an end timing of the time window corresponding to the minimum value;
   the end timing of the seventh time window is not later than the start timing of the data transmission;
   an interval between the start timing of the seventh time window and the start timing of the time window corresponding to the minimum value satisfies a ninth time threshold condition;
   an interval between the end timing of the seventh time window and the end timing of the time window corresponding to the minimum value satisfies a tenth time threshold condition; and
   an interval between the end timing of the seventh time window and the start timing of the data transmission satisfies an eleventh time threshold condition.

As shown in FIG. 10, the seventh time window is the time window for the periodic CSI measurement and/or reporting, and the seventh cycle is the reporting cycle for the periodic CSI measurement and/or reporting.

The eleventh time window and the eleventh cycle, and the twelfth time window and the twelfth cycle in the embodiments of the application may represent any two of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It should be noted that, the seventh cycle in the embodiments of the present application may be a minimum value between cycles in any two situations mentioned above.

In addition, for more than two situations, for example, the time windows and the cycles in FIG. 5 to FIG. 9 are all configured, the seventh cycle may also be a minimum value between cycles of the more than two situations mentioned above, and a corresponding time domain relationship is the same as a time domain relationship corresponding to any two situations mentioned above, which is not repeated herein.

In an embodiment, the configuration information corresponding to the first transceiving mechanism includes the seventh time window and the seventh cycle, where the seventh time window is the time window for the periodic CSI measurement and/or reporting, and the seventh cycle is the reporting cycle for the periodic CSI measurement and/or reporting;
the eighth transceiving mechanism and the ninth transceiving mechanism are used for representing any two of the second transceiving mechanism, the third transceiving mechanism, the fourth transceiving mechanism, the fifth transceiving mechanism and the sixth transceiving mechanism, the information corresponding to the eighth transceiving mechanism includes the eleventh time window and the eleventh cycle, and the information corresponding to the ninth transceiving mechanism includes the twelfth time window and the twelfth cycle;
the seventh cycle is any cycle of the eleventh cycle and the twelfth cycle; and
a time domain relationship between the seventh time window and a time window corresponding to the any cycle includes at least one of the following:
   the start timing of the seventh time window is not earlier than a start timing of the eleventh time window, or the start timing of the seventh time window is not earlier than a start timing of the twelfth time window;
   the end timing of the seventh time window is not later than an end timing of the eleventh time window, or the end timing of the seventh time window is not later than an end timing of the twelfth time window;
   the end timing of the seventh time window is not later than the start timing of the data transmission;
   an interval between the start timing of the seventh time window and the start timing of the eleventh time window satisfies a twelfth time threshold condition; or, an interval between the start timing of the seventh time window and the start timing of the twelfth time window satisfies a thirteenth time threshold condition;
   an interval between the end timing of the seventh time window and the end timing of the eleventh time window satisfies a fourteenth time threshold condition; or, an interval between the start timing of the seventh time window and the start timing of the twelfth time window satisfies a fifteenth time threshold condition; and
   an interval between the end timing of the seventh time window and the start timing of the data transmission satisfies a sixteenth time threshold condition.

As shown in FIG. 10, the seventh time window is the time window for the periodic CSI measurement and/or reporting, and the seventh cycle is the reporting cycle for the periodic CSI measurement and/or reporting.

The eleventh time window and the eleventh cycle, and the twelfth time window and the twelfth cycle in the embodiments of the application may represent any two of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It should be noted that, the seventh cycle in the embodiments of the present application may be any one of cycles in any two situations mentioned above.

In addition, for more than two situations, for example, the time windows and the time cycles in FIG. 5 to FIG. 9 are all configured, the seventh cycle may also be any one of cycles of the more than two situations mentioned above, and a time domain relationship corresponding to the seventh time window is the same as the time domain relationship corresponding to any two situations mentioned above, which is not repeated herein.

It can be seen from the above embodiment that, besides the information of periodic CSI measurement and/or reporting, the network device may further configure time windows and cycles of any two of other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the periodic CSI measurement and/or reporting to be performed, improves the user throughput, and reduces the latency, thereby improving the system performance.

In an embodiment, the configuration information corresponding to the first transceiving mechanism includes the ninth time window and the ninth cycle, where the start point of the ninth cycle is the activation time point of the semi-persistent CSI measurement and/or reporting, the end point of the ninth cycle is the deactivation time point of the semi-persistent CSI measurement and/or reporting, and the ninth time window is the activation time window within the ninth cycle;
the eighth transceiving mechanism and the ninth transceiving mechanism are used for representing any two of the second transceiving mechanism, the third transceiving mechanism, the fourth transceiving mechanism, the fifth transceiving mechanism and the sixth transceiving mechanism, the information corresponding to the eighth transceiving mechanism includes the eleventh time window and the eleventh cycle, and the information corresponding to the ninth transceiving mechanism includes the twelfth time window and the twelfth cycle; and
a time domain relationship between the ninth time window, the eleventh time window and the twelfth time window includes at least one of the following:
   the start timing of the ninth time window is not earlier than a first timing, where the first timing is an earliest start timing between the start timing of the eleventh time window and the start timing of the twelfth time window;
   the end timing of the ninth time window is not later than a second timing, where the second timing is a latest end timing between the end timing of the eleventh time window and the end timing of the twelfth time window;
   an interval between the start timing of the ninth time window and a first value satisfies a seventeenth time threshold condition, where the first value is an interval between the start timing of the eleventh time window and the start timing of the twelfth time window;
   an interval between the end timing of the ninth time window and a second value satisfies an eighteenth time threshold condition, where the second value is an interval between the end timing of the eleventh time window and the end timing of the twelfth time window;
   the activation time point is not earlier than a third value, where the third value is a start timing of an Mth eleventh time window, or a start timing of an Mth twelfth time window, M is an integer greater than 0; and
   the deactivation time point is not later than a fourth value, where the fourth value is an end timing of the Mth eleventh time window, or an end timing of the Mth twelfth time window, M is an integer greater than 0.

As shown in FIG. 11, the start point of the ninth cycle is the first activation time point of the semi-persistent CSI measurement and/or reporting, the end point of the ninth cycle is the second deactivation time point of the semi-persistent CSI measurement and/or reporting, and the ninth time window is the activation time window within the ninth cycle.

The eleventh time window and the eleventh cycle, and the twelfth time window and the twelfth cycle in the embodiments of the application may represent any two of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It should be noted that, for more than two situations, for example, the time windows and the cycles in FIG. 5 to FIG. 9 are all configured, a time domain relationship corresponding to the ninth time window is the same as a time domain relationship corresponding to any two situations mentioned above, which is not repeated herein.

It can be seen from the above embodiment that, besides the information of semi-persistent CSI measurement and/or reporting, the network device may further configure the time windows and the cycles of any two of other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the semi-persistent CSI measurement and/or reporting to be performed, improves the user throughput, and reduces the latency, thereby improving the system performance.

In an embodiment, the configuration information corresponding to the first transceiving mechanism includes the tenth time window, where the tenth time window is the time window for an aperiodic CSI measurement and/or reporting;
the eighth transceiving mechanism and the ninth transceiving mechanism are used for representing any two of the second transceiving mechanism, the third transceiving mechanism, the fourth transceiving mechanism, the fifth transceiving mechanism and the sixth transceiving mechanism, the information corresponding to the eighth transceiving mechanism includes the eleventh time window and the eleventh cycle, and the information corresponding to the ninth transceiving mechanism includes the twelfth time window and the twelfth cycle;
the tenth time window is any one of the eleventh time window and the twelfth time window; and
a time domain relationship between the tenth time window, the eleventh time window and the twelfth time window includes at least one of the following:
   the start timing of the tenth time window is not earlier than the start timing of the eleventh time window; or, the start timing of the tenth time window is not earlier than the start timing of the twelfth time window;
   the end timing of the tenth time window is not later than the end timing of the eleventh time window; or, the end timing of the tenth timing is not later than the end timing of the twelfth time window;
   the end timing of the tenth time window is not later than the start timing of the data transmission;
   an interval between the start timing of the tenth time window and the start timing of the eleventh time window satisfies a nineteenth time threshold condition; or, an interval between the start timing of the tenth time window and the start timing of the twelfth time window satisfies a twentieth time threshold condition;
   an interval between the end timing of the tenth time window and the end timing of the eleventh time window satisfies a twenty-first time threshold condition; or, an interval between the start timing of the tenth time window and the start timing of the twelfth time window satisfies a twenty-second time threshold condition; and
   an interval between the end timing of the tenth time window and the start timing of the data transmission satisfies a twenty-third time threshold condition.

As shown in FIG. 12, the tenth time window is the time window of the aperiodic CSI measurement and/or reporting.

The eleventh time window and the eleventh cycle, and the twelfth time window and the twelfth cycle in the embodiments of the application may represent any two of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It should be noted that, for more than two situations, for example, the time windows and the time cycles in FIG. 5 to FIG. 9 are all configured, a time domain relationship corresponding to the tenth time window is the same as a time domain relationship corresponding to any two situations mentioned above, which is not repeated herein.

It can be seen from the above embodiment that, besides the information of aperiodic CSI measurement and/or reporting, the network device may further configure time windows and cycles of any two of other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the aperiodic CSI measurement and/or reporting to be performed, improves the user throughput, and reduces the latency, thereby improving the system performance.

In an embodiment, the signal transceiving method further includes the following step:
performing signal transceiving based on the configuration information.

Besides the information of CSI measurement and/or reporting configured by the network device for the terminal, the configuration information may further include information of other transceiving mechanisms configured by the network device for the terminal. For example, the PDDCH monitoring window or opportunity for the dedicated service, the DRX, the WUS, the PDCCH skipping, the search space switching, etc. The dedicated service may be the XR service.

In addition to configuring the above information for the terminal, the network device itself may also perform signal transceiving based on the configuration information.

It can be seen from the above embodiments that, both the network device and the terminal perform signal transceiving based on the configuration information, which solves the problem of coexistence of multiple mechanisms, and improves the system performance.

FIG. 13 is a second schematic flowchart of a signal transceiving method according to an embodiment of the present application, the signal transceiving method may be applied to a terminal device. As shown in FIG. 13, the signal transceiving method may include the following steps.

Step 1301: receiving configuration information used for signal transceiving, where the configuration information includes information corresponding to at least two transceiving mechanisms, and the at least two transceiving mechanisms include a first transceiving mechanism representing channel state information (CSI) measurement and/or reporting.

Besides information of CSI measurement and/or reporting configured by a network device for a terminal, the configuration information may further include information of other transceiving mechanisms configured by the network device for the terminal. For example, a physical downlink control channel (PDDCH) monitoring window or opportunity for a dedicated service, a discontinuous reception (DRX), a wake-up signal (WUS), a PDCCH skipping, a search space switching, etc. The dedicated service may be an extended reality (XR) service.

Step 1302: performing signal transceiving based on the configuration information.

Since besides the information of CSI measurement and/or reporting configured for the terminal, the configuration information may further include the information of other transceiving mechanisms configured for the terminal, after receiving the configuration information, the terminal may perform CSI measurement and/or reporting based on the configuration information without affecting other transceiving mechanisms.

It can be seen from the above embodiment that, by receiving the configuration information for signal transceiving and performing signal transceiving based on the configuration information, the terminal may perform the CSI measurement and/or reporting based on the configuration information without affecting other transceiving mechanisms, which solves a problem of coexistence of multiple mechanisms, allows the CSI measurement and/or reporting to be performed timely, improves user throughput, and reduces latency, thereby improving a system performance.

In an embodiment, the at least two transceiving mechanisms further includes one or more of the following:
a second transceiving mechanism representing a PDCCH monitoring window or opportunity for a dedicated service;
a third transceiving mechanism representing a DRX;
a fourth transceiving mechanism representing a WUS;
a fifth transceiving mechanism representing a PDCCH skipping; and
a sixth transceiving mechanism representing a search space switching.

Besides the information of CSI measurement and/or reporting, the network device may further configure the information of other transceiving mechanisms for the terminal. The other transceiving mechanisms may include but are not limited to the following transceiving mechanisms: the PDCCH monitoring window or opportunity for the dedicated service, the DRX, the WUS, the PDCCH skipping, the search space switching, etc.

It can be seen from the above embodiment that, besides the information of CSI measurement and/or reporting, the network device may further configure the information of other transceiving mechanisms for the terminal, such as the PDCCH monitoring window or opportunity for the dedicated service, the DRX, the WUS, the PDCCH skipping, the search space switching, etc., which solves the problem of coexistence of multiple mechanisms, allows the CSI measurement and/or reporting to be performed timely, improves the user throughput, and reduces the latency, thereby improving the system performance.

In an embodiment, information corresponding to the second transceiving mechanism includes a first time window, or a first time window and a first cycle, where the first time window is the PDDCH monitoring window or opportunity for the dedicated service, and the first cycle is a cycle for the PDDCH monitoring window or opportunity for the dedicated service;
information corresponding to the third transceiving mechanism includes a second time window and a second cycle, and/or a third time window and a third cycle, where the second cycle is a long DRX cycle, the second time window is a DRX activation window within the long DRX cycle, the third cycle is a short DRX cycle, and the third time window is a DRX activation window within the short DRX cycle;
information corresponding to the fourth transceiving mechanism includes a fourth time window and a fourth cycle, where the fourth time window is a WUS activation window, and the fourth cycle is a WUS cycle;
information corresponding to the fifth transceiving mechanism includes a fifth time window and a fifth cycle, where the fifth time window is a PDCCH skipping activation window, and the fifth cycle is a PDCCH skipping cycle;
information corresponding to the sixth transceiving mechanism includes a sixth time window and a sixth cycle, where the sixth time window is a search space activation window, and the sixth cycle is a search space monitoring cycle.

As shown in FIG. 5, the first time window is the PDCCH monitoring window or opportunity for the dedicated service, and the first cycle is the cycle of the PDCCH monitoring window or opportunity for the dedicated service. The dedicated service may be the XR service.

As shown in FIG. 6, the second cycle may be the long DRX cycle, the second time window may be the DRX activation window within the long DRX cycle, the third cycle may be the short DRX cycle, and the third time window may be the DRX activation window within the short DRX cycle. The time lengths of the second time window and the third time window may be the same or different.

As shown in FIG. 7, the fourth time window is the WUS activation window, and the fourth cycle is the WUS cycle.

As shown in FIG. 8, the fifth time window is the PDCCH skipping activation window, and the fifth cycle is the PDCCH skipping cycle.

As shown in FIG. 9, the sixth time window is the search space activation window, and the sixth cycle is the search space monitoring cycle.

It can be seen from the above embodiment that, besides the information of CSI measurement and/or reporting, the network device may further configure time windows and cycles of other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the CSI measurement and/or reporting to be performed timely, improves the user throughput, and reduces the latency, thereby improving the system performance.

In an embodiment, configuration information corresponding to the first transceiving mechanism includes a seventh time window and a seventh cycle, where the seventh time window is a time window for a periodic CSI measurement and/or reporting, and the seventh cycle is a reporting cycle for the periodic CSI measurement and/or reporting;
the seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism includes an eighth time window and an eighth cycle;
the seventh cycle is N times the eighth cycle, where in case that the seventh transceiving mechanism is the third transceiving mechanism, N is an integer greater than 1; and in case that the seventh transceiving mechanism is any one of the second transceiving mechanism, the fourth transceiving mechanism, the fifth transceiving mechanism and the sixth transceiving mechanism, N is an integer greater than or equal to 1; and
a time domain relationship between the seventh time window and the eighth time window includes at least one of the following:
   a start timing of the seventh time window is not earlier than a start timing of N eighth time windows;
   an end timing of the seventh time window is not later than an end timing of N eighth time windows;
   the end timing of the seventh time window is not later than a start timing of a data transmission;
   an interval between the start timing of the seventh time window and the start timing of the N eighth time windows satisfies a first time threshold condition;
   an interval between the end timing of the seventh time window and the end timing of the N eighth time windows satisfies a second time threshold condition; and
   an interval between the end timing of the seventh time window and the start timing of the data transmission satisfies a third time threshold condition.

As shown in FIG. 10, the seventh time window is the time window for the periodic CSI measurement and/or reporting, and the seventh cycle is the reporting cycle for the periodic CSI measurement and/or reporting.

The eighth time window and the eighth cycle in the embodiments of the application may represent any of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It can be seen from the above embodiment that, besides the information of periodic CSI measurement and/or reporting, the network device may further configure a time window and a cycle of any other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the periodic CSI measurement and/or reporting to be performed, improves the user throughput, and reduces the latency, thereby improving the system performance.

In an embodiment, the configuration information corresponding to the first transceiving mechanism includes a ninth time window and a ninth cycle, where a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
the seventh transceiving mechanism is used for representing any one of the second transceiving mechanism, the third transceiving mechanism, the fourth transceiving mechanism, the fifth transceiving mechanism, and the sixth transceiving mechanism; the information corresponding to the seventh transceiving mechanism includes the eighth time window and the eighth cycle; and
a time domain relationship between the ninth time window and the eighth time window includes at least one of the following:
   a start timing of the ninth time window is not earlier than a start timing of the eighth time window;
   an end timing of the ninth time window is not later than an end timing of the eighth time window;
   the end timing of the seventh time window is not later than a start timing of a data transmission;
   an interval between the start timing of the ninth time window and the start timing of the eighth time window satisfies a fourth time threshold condition;
   an interval between the end timing of the ninth time window and the start timing of the eighth time window satisfies a fifth time threshold condition;
   the activation time point is not earlier than a start timing of an Mth eighth time window, M is an integer greater than 0; and
   the deactivation time point is not later than an end timing of the Mth eighth time window, M is an integer greater than 0.

As shown in FIG. 11, a start point of the ninth cycle is a first activation time point of the semi-persistent CSI measurement and/or reporting, an end point of the ninth cycle is a second deactivation time point of the semi-persistent CSI measurement and/or reporting, and the ninth time window is an activation time window within the ninth cycle.

The eighth time window and the eighth cycle in the embodiments of the application may represent any of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It can be seen from the above embodiment that, besides the information of semi-persistent CSI measurement and/or reporting, the network device may further configure the time window and the cycle of any other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the semi-persistent CSI measurement and/or reporting to be performed, improves the user throughput, and reduces the latency, thereby improving the system performance.

In an embodiment, the configuration information corresponding to the first transceiving mechanism includes a tenth time window, where the tenth time window is a time window for an aperiodic CSI measurement and/or reporting;
the seventh transceiving mechanism is used for representing any one of the second transceiving mechanism, the third transceiving mechanism, the fourth transceiving mechanism, the fifth transceiving mechanism, and the sixth transceiving mechanism; the information corresponding to the seventh transceiving mechanism includes the eighth time window and the eighth cycle; and
a time domain relationship between the tenth time window and the eighth time window includes at least one of the following:
   a start timing of the tenth time window is not earlier than the start timing of the eighth time window;
   an end timing of the tenth time window is not later than the end timing of the eighth time window;
   the end timing of the tenth time window is not later than the start timing of the data transmission;
   an interval between the start timing of the tenth time window and the start timing of the eighth time window satisfies a sixth time threshold condition;
   an interval between the end timing of the tenth time window and the start timing of the eighth time window satisfies a seventh time threshold condition; and
   an interval between the end timing of the tenth time window and the start timing of the data transmission satisfies an eighth time threshold condition.

As shown in FIG. 12, the tenth time window is the time window of the aperiodic CSI measurement and/or reporting.

The eighth time window and the eighth cycle in the embodiments of the application may represent any of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It can be seen from the above embodiment that, besides the information of aperiodic CSI measurement and/or reporting, the network device may further configure the time window and the cycle of any other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves a problem of coexistence of two mechanisms, allows the aperiodic CSI measurement and/or reporting to be performed, improves the user throughput, and reduces the latency, thereby improving the system performance.

In an embodiment, the configuration information corresponding to the first transceiving mechanism includes the seventh time window and the seventh cycle, where the seventh time window is the time window for the periodic CSI measurement and/or reporting, and the seventh cycle is the reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism includes an eleventh time window and an eleventh cycle, and information corresponding to the ninth transceiving mechanism includes a twelfth time window and a twelfth cycle;
the seventh cycle is a minimum value between the eleventh cycle and the twelfth cycle; and
a time domain relationship between the seventh time window and a time window corresponding to the minimum value includes at least one of the following:
   the start timing of the seventh time window is not earlier than a start timing of the time window corresponding to the minimum value;
   the end timing of the seventh time window is not later than an end timing of the time window corresponding to the minimum value;
   the end timing of the seventh time window is not later than the start timing of the data transmission;
   an interval between the start timing of the seventh time window and the start timing of the time window corresponding to the minimum value satisfies a ninth time threshold condition;
   an interval between the end timing of the seventh time window and the end timing of the time window corresponding to the minimum value satisfies a tenth time threshold condition; and
   an interval between the end timing of the seventh time window and the start timing of the data transmission satisfies an eleventh time threshold condition.

As shown in FIG. 10, the seventh time window is the time window for the periodic CSI measurement and/or reporting, and the seventh cycle is the reporting cycle for the periodic CSI measurement and/or reporting.

The eleventh time window and the eleventh cycle, and the twelfth time window and the twelfth cycle in the embodiments of the application may represent any two of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It should be noted that, the seventh cycle in the embodiments of the present application may be a minimum value between cycles in any two situations mentioned above.

In addition, for more than two situations, for example, the time windows and the cycles in FIG. 5 to FIG. 9 are all configured, the seventh cycle may also be a minimum value between cycles of the more than two situations mentioned above, and a corresponding time domain relationship is the same as a time domain relationship corresponding to any two situations mentioned above, which is not repeated herein.

In an embodiment, the configuration information corresponding to the first transceiving mechanism includes the seventh time window and the seventh cycle, where the seventh time window is the time window for the periodic CSI measurement and/or reporting, and the seventh cycle is the reporting cycle for the periodic CSI measurement and/or reporting;
the eighth transceiving mechanism and the ninth transceiving mechanism are used for representing any two of the second transceiving mechanism, the third transceiving mechanism, the fourth transceiving mechanism, the fifth transceiving mechanism and the sixth transceiving mechanism, the information corresponding to the eighth transceiving mechanism includes the eleventh time window and the eleventh cycle, and the information corresponding to the ninth transceiving mechanism includes the twelfth time window and the twelfth cycle;
the seventh cycle is any cycle of the eleventh cycle and the twelfth cycle; and
a time domain relationship between the seventh time window and a time window corresponding to the any one cycle includes at least one of the following:
   the start timing of the seventh time window is not earlier than a start timing of the eleventh time window, or the start timing of the seventh time window is not earlier than a start timing of the twelfth time window;
   the end timing of the seventh time window is not later than an end timing of the eleventh time window, or the end timing of the seventh time window is not later than an end timing of the twelfth time window;
   the end timing of the seventh time window is not later than the start timing of the data transmission;
   an interval between the start timing of the seventh time window and the start timing of the eleventh time window satisfies a twelfth time threshold condition; or, an interval between the start timing of the seventh time window and the start timing of the twelfth time window satisfies a thirteenth time threshold condition;
   an interval between the end timing of the seventh time window and the end timing of the eleventh time window satisfies a fourteenth time threshold condition; or, an interval between the start timing of the seventh time window and the start timing of the twelfth time window satisfies a fifteenth time threshold condition; and
   an interval between the end timing of the seventh time window and the start timing of the data transmission satisfies a sixteenth time threshold condition.

As shown in FIG. 10, the seventh time window is the time window for the periodic CSI measurement and/or reporting, and the seventh cycle is the reporting cycle for the periodic CSI measurement and/or reporting.

The eleventh time window and the eleventh cycle, and the twelfth time window and the twelfth cycle in the embodiments of the application may represent any two of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It should be noted that, the seventh cycle in the embodiments of the present application may be any one of cycles in any two situations mentioned above.

In addition, for more than two situations, for example, the time windows and the time cycles in FIG. 5 to FIG. 9 are all configured, the seventh cycle may also be any one of cycles of the more than two situations mentioned above, and a time domain relationship corresponding to the seventh time window is the same as the time domain relationship corresponding to any two situations mentioned above, which is not repeated herein.

It can be seen from the above embodiment that, besides the information of periodic CSI measurement and/or reporting, the network device may further configure the time windows and the cycles of any two of other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the periodic CSI measurement and/or reporting to be performed, improves the user throughput, and reduces the latency, thereby improving the system performance.

In an embodiment, the configuration information corresponding to the first transceiving mechanism includes the ninth time window and the ninth cycle, where the start point of the ninth cycle is the activation time point of the semi-persistent CSI measurement and/or reporting, the end point of the ninth cycle is the deactivation time point of the semi-persistent CSI measurement and/or reporting, and the ninth time window is the activation time window within the ninth cycle;
the eighth transceiving mechanism and the ninth transceiving mechanism are used for representing any two of the second transceiving mechanism, the third transceiving mechanism, the fourth transceiving mechanism, the fifth transceiving mechanism and the sixth transceiving mechanism, the information corresponding to the eighth transceiving mechanism includes the eleventh time window and the eleventh cycle, and the information corresponding to the ninth transceiving mechanism includes the twelfth time window and the twelfth cycle; and
a time domain relationship between the ninth time window, the eleventh time window and the twelfth time window includes at least one of the following:
   the start timing of the ninth time window is not earlier than a first timing, where the first timing is an earliest start timing between the start timing of the eleventh time window and the start timing of the twelfth time window;
   the end timing of the ninth time window is not later than a second timing, where the second timing is a latest end timing between the end timing of the eleventh time window and the end timing of the twelfth time window;
   an interval between the start timing of the ninth time window and a first value satisfies a seventeenth time threshold condition, where the first value is an interval between the start timing of the eleventh time window and the start timing of the twelfth time window;
   an interval between the end timing of the ninth time window and a second value satisfies an eighteenth time threshold condition, where the second value is an interval between the end timing of the eleventh time window and the end timing of the twelfth time window;
   the activation time point is not earlier than a third value, where the third value is a start timing of an Mth eleventh time window, or a start timing of an Mth twelfth time window, M is an integer greater than 0; and
   the deactivation time point is not later than a fourth value, where the fourth value is an end timing of the Mth eleventh time window, or an end timing of the Mth twelfth time window, M is an integer greater than 0.

As shown in FIG. 11, the start point of the ninth cycle is the first activation time point of the semi-persistent CSI measurement and/or reporting, the end point of the ninth cycle is the second deactivation time point of the semi-persistent CSI measurement and/or reporting, and the ninth time window is the activation time window within the ninth cycle.

The eleventh time window and the eleventh cycle, and the twelfth time window and the twelfth cycle in the embodiments of the application may represent any two of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It should be noted that, for more than two situations, for example, the time windows and the cycles in FIG. 5 to FIG. 9 are all configured, a time domain relationship corresponding to the ninth time window is the same as a time domain relationship corresponding to any two situations mentioned above, which is not repeated herein.

It can be seen from the above embodiment that, besides the information of semi-persistent CSI measurement and/or reporting, the network device may further configure the time windows and the cycles of any two of other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the semi-persistent CSI measurement and/or reporting to be performed, improves the user throughput, and reduces the latency, thereby improving the system performance.

In an embodiment, the configuration information corresponding to the first transceiving mechanism includes the tenth time window, where the tenth time window is the time window for an aperiodic CSI measurement and/or reporting;
the eighth transceiving mechanism and the ninth transceiving mechanism are used for representing any two of the second transceiving mechanism, the third transceiving mechanism, the fourth transceiving mechanism, the fifth transceiving mechanism and the sixth transceiving mechanism, the information corresponding to the eighth transceiving mechanism includes the eleventh time window and the eleventh cycle, and the information corresponding to the ninth transceiving mechanism includes the twelfth time window and the twelfth cycle;
the tenth time window is any one of the eleventh time window and the twelfth time window; and
a time domain relationship between the tenth time window, the eleventh time window and the twelfth time window includes at least one of the following:
   the start timing of the tenth time window is not earlier than the start timing of the eleventh time window; or, the start timing of the tenth time window is not earlier than the start timing of the twelfth time window;
   the end timing of the tenth time window is not later than the end timing of the eleventh time window; or, the end timing of the tenth timing is not later than the end timing of the twelfth time window;
   the end timing of the tenth time window is not later than the start timing of the data transmission;
   an interval between the start timing of the tenth time window and the start timing of the eleventh time window satisfies a nineteenth time threshold condition; or, an interval between the start timing of the tenth time window and the start timing of the twelfth time window satisfies a twentieth time threshold condition;
   an interval between the end timing of the tenth time window and the end timing of the eleventh time window satisfies a twenty-first time threshold condition; or, an interval between the start timing of the tenth time window and the start timing of the twelfth time window satisfies a twenty-second time threshold condition; and
   an interval between the end timing of the tenth time window and the start timing of the data transmission satisfies a twenty-third time threshold condition.

As shown in FIG. 12, the tenth time window is the time window of the aperiodic CSI measurement and/or reporting.

The eleventh time window and the eleventh cycle, and the twelfth time window and the twelfth cycle in the embodiments of the application may represent any two of the following situations:
the first time window and the first cycle in FIG. 5;
the second time window and the second cycle, or the third time window and the third cycle in FIG. 6;
the fourth time window and the fourth cycle in FIG. 7;
the fifth time window and the fifth cycle in FIG. 8; and
the sixth time window and the sixth cycle in FIG. 9.

It should be noted that, for more than two situations, for example, the time windows and the time cycles in FIG. 5 to FIG. 9 are all configured, a time domain relationship corresponding to the tenth time window is the same as a time domain relationship corresponding to any two situations mentioned above, which is not repeated herein.

It can be seen from the above embodiment that, besides the information of aperiodic CSI measurement and/or reporting, the network device may further configure the time windows and the cycles of any two of other transceiving mechanisms for the terminal, such as the time window and the cycle for the PDDCH monitoring window or opportunity for the dedicated service, the time window and the cycle of the DRX, the time window and the cycle of the WUS, the time window and the cycle of the PDCCH skipping, the time window and the cycle of the search space switching, etc., which solves the problem of coexistence of multiple mechanisms, allows the aperiodic CSI measurement and/or reporting to be performed, improves the user throughput, and reduces the latency, thereby improving the system performance.

A procedure of the above-mentioned signal transceiving is described in the following nine embodiments.

Embodiment 1: a physical downlink control channel (PDDCH) monitoring window or opportunity for a dedicated service is configured.

### (1) periodic channel state information (CSI) measurement and/or reporting.

A seventh time window is a time window for the periodic CSI measurement and/or reporting, and a seventh cycle is a reporting cycle for the periodic CSI measurement and/or reporting; and
configuration information corresponding to a second transceiving mechanism includes a first time window, or a first time window and a first cycle, where the first time window is the PDDCH monitoring window or opportunity for the dedicated service, and the first cycle is a cycle for the PDDCH monitoring window or opportunity for the dedicated service, where the dedicated service may be an extended reality (XR) service.

### a. first situation.

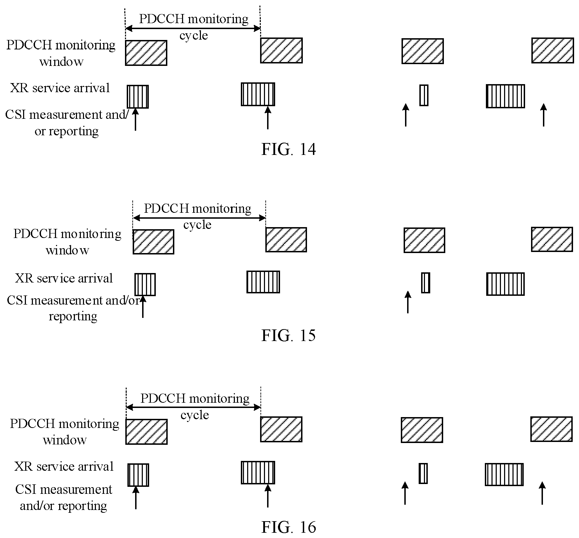

As shown in FIG. 14, the seventh cycle is equal to the first cycle, a time domain relationship between the seventh time window and the first time window includes at least one of the following:
a start timing of the seventh time window is not earlier than a start timing of the first time window;
an end timing of the seventh time window is not later than an end timing of the first time window;
the end timing of the seventh time window is not later than a start timing of a data transmission;
an interval between the start timing of the seventh time window and the start timing of the first time window satisfies a first time threshold condition corresponding to the PDDCH monitoring window or opportunity for the dedicated service;
an interval between the end timing of the seventh time window and the end timing of the first time window satisfies a second time threshold condition corresponding to the PDDCH monitoring window or opportunity for the dedicated service; and
an interval between the end timing of the seventh time window and the start timing of the data transmission satisfies a third time threshold condition corresponding to the PDDCH monitoring window or opportunity for the dedicated service.

It should be noted that, the "start timing of the data transmission" means that the CSI measurement is completed before the data transmission starts. The "start timing of the data transmission" in other embodiments of the present application has the same meaning, which is not repeated in the following.

### b. second situation.

The seventh cycle is N times the first cycle, and N is an integer greater than 1 (as shown in FIG. 15, the value of N is 2). A time domain relationship between the seventh time window and the first time window includes at least one of the following:
a start timing of the seventh time window is not earlier than a start timing of N first time windows;
an end timing of the seventh time window is not later than an end timing of the N first time windows;
the end timing of the seventh time window is not later than a start timing of a data transmission;
an interval between the start timing of the seventh time window and the start timing of the N first time windows satisfies a first time threshold condition corresponding to the PDDCH monitoring window or opportunity for the dedicated service;
an interval between the end timing of the seventh time window and the end timing of the N first time windows satisfies a second time threshold condition corresponding to the PDDCH monitoring window or opportunity for the dedicated service; and
an interval between the end timing of the seventh time window and the start timing of the data transmission satisfies a third time threshold condition corresponding to the PDDCH monitoring window or opportunity for the dedicated service.

### (2) aperiodic CSI.

As shown in FIG. 16, a tenth time window is a time window of the aperiodic CSI measurement and/or reporting; the first time window is the PDDCH monitoring window or opportunity for the dedicated service, and the first cycle is the cycle for the PDDCH monitoring window or opportunity for the dedicated service. The dedicated service may be the XR service.

A time domain relationship between the tenth time window and the eighth time window includes at least one of the following:
a start timing of the tenth time window is not earlier than the start timing of the first time window;
an end timing of the tenth time window is not later than the end timing of the first time window;
the end timing of the tenth time window is not later than the start timing of the data transmission;
an interval between the start timing of the tenth time window and the start timing of the first time window satisfies a sixth time threshold condition corresponding to the PDDCH monitoring window or opportunity for the dedicated service;
an interval between the end timing of the tenth time window and the start timing of the first time window satisfies a seventh time threshold condition corresponding to the PDDCH monitoring window or opportunity for the dedicated service; and
an interval between the end timing of the tenth time window and the start timing of the data transmission satisfies an eighth time threshold condition corresponding to the PDDCH monitoring window or opportunity for the dedicated service.

### (3) Semi-persistent CSI.

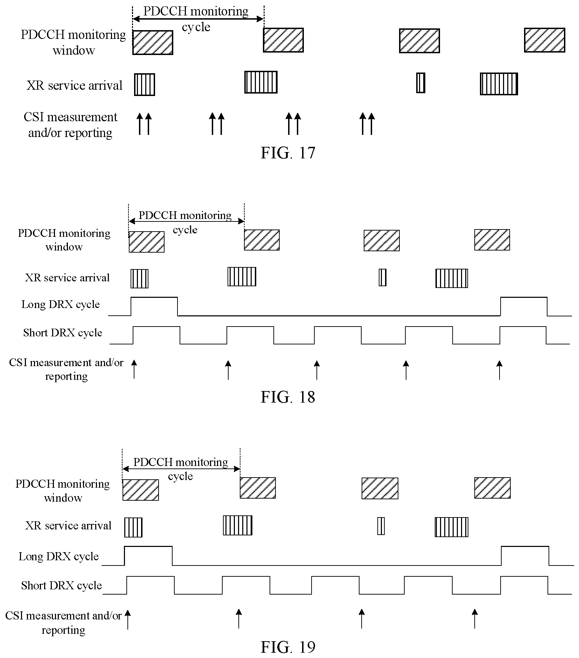

As show in FIG. 17, a start point of a ninth cycle is an activation time point of the semi-persistent CSI measurement and/or reporting, an end point of the ninth cycle is a deactivation time point of the CSI, and a ninth time window is an activation time window within the ninth cycle; the first time window is the PDDCH monitoring window or opportunity for the dedicated service, and the first cycle is the cycle for the PDDCH monitoring window or opportunity for the dedicated service. The dedicated service may be the XR service.

A time domain relationship between the ninth time window and the first time window includes at least one of the following:
a start timing of the ninth time window is not earlier than the start timing of the first time window;
an end timing of the ninth time window is not later than the end timing of the first time window;
an interval between the start timing of the ninth time window and the start timing of the first time window satisfies a fourth time threshold condition corresponding to the PDDCH monitoring window or opportunity for the dedicated service;
an interval between the end timing of the ninth time window and the start timing of the first time window satisfies a fifth time threshold condition corresponding to the PDDCH monitoring window or opportunity for the dedicated service;
the activation time point is not earlier than a start timing of an Mth first time window, M is an integer greater than 0; and
the deactivation time point is not later than an end timing of the Mth first time window, M is an integer greater than 0.

Embodiment 2: configuration for a discontinuous reception (DRX).

### (1) periodic channel state information (CSI) measurement and/or reporting.

A seventh time window is a time window for a periodic CSI measurement and/or reporting, and a seventh cycle is a reporting cycle for the periodic CSI measurement and/or reporting; and
configuration information corresponding to DRX includes a second time window and a second cycle, and/or a third time window and a third cycle, where the second cycle is a long DRX cycle, the second time window is a DRX activation window within the long DRX cycle, the third cycle is a short DRX cycle, and the third time window is a DRX activation window within the short DRX cycle.

The seventh cycle is N times the second cycle or the third cycle, N is a positive integer greater than 1, and a time domain relationship between the seventh time window and a first time window includes at least one of the following:
a start timing of the seventh time window is not earlier than a start timing of N second time windows or N third time windows;
an end timing of the seventh time window is not later than an end timing of the N second time windows or the N third time windows;
the end timing of the seventh time window is not later than a start timing of a data transmission;
an interval between the start timing of the seventh time window and the start timing of the N second time windows or the N third time windows satisfies a first time threshold condition corresponding to the DRX;
an interval between the end timing of the seventh time window and the end timing of the N second time windows or the N third time windows satisfies a second time threshold condition corresponding to the DRX; and
an interval between the end timing of the seventh time window and the start timing of the data transmission satisfies a third time threshold condition corresponding to the DRX.

### (2) aperiodic CSI.

A tenth time window is a time window for an aperiodic CSI measurement and/or reporting; and
the configuration information corresponding to DRX includes the second time window and the second cycle, and/or the third time window and the third cycle, where the second cycle is the long DRX cycle, the second time window is the DRX activation window within the long DRX cycle, the third cycle is the short DRX cycle, and the third time window is the DRX activation window within the short DRX cycle.

A time domain relationship between the tenth time window and the second time window includes at least one of the following:
a start timing of the tenth time window is not earlier than a start timing of the second time window or the third time window;
an end timing of the tenth time window is not later than an end timing of the second time window of the third time window;
the end timing of the tenth time window is not later than the start timing of the data transmission;
an interval between the start timing of the tenth time window and the start timing of the second time window or the third time window satisfies a sixth time threshold condition corresponding to the DRX;
an interval between the end timing of the tenth time window and the start timing of the second time window or the third time window satisfies a seventh time threshold condition corresponding to the DRX; and
an interval between the end timing of the tenth time window and the start timing of the data transmission satisfies an eighth time threshold condition corresponding to the DRX.

### (3) semi-persistent CSI.

A start point of a ninth cycle is an activation time point of the semi-persistent CSI measurement and/or reporting, an end point of the ninth cycle is a deactivation time point of the semi-persistent CSI measurement and/or reporting, and a ninth time window is an activation time window within the ninth cycle; and
the configuration information corresponding to DRX includes the second time window and the second cycle, and/or the third time window and the third cycle, where the second cycle is the long DRX cycle, the second time window is the DRX activation window within the long DRX cycle, the third cycle is the short DRX cycle, and the third time window is the DRX activation window within the short DRX cycle.

A time domain relationship between the ninth time window and the second time window or the third time window includes at least one of the following:
a start timing of the ninth time window is not earlier than the start timing of the second time window or the third time window;
an end timing of the ninth time window is not later than the end timing of the second time window or the third time window;
an interval between the start timing of the ninth time window and the start timing of the second time window or the third time window satisfies a fourth time threshold condition corresponding to the DRX;
an interval between the end timing of the ninth time window and the start timing of the second time window or the third time window satisfies a fifth time threshold condition corresponding to the DRX;
the activation time point is not earlier than a start timing of an Mth second time window or an Mth third time window, M is an integer greater than 0; and
the deactivation time point is not later than an end timing of the Mth second time window or the Mth third time window, M is an integer greater than 0.

Embodiment 3: configuration for a wake-up signal (WUS).

### (1) periodic channel state information (CSI) measurement and/or reporting.

A seventh time window is a time window for the periodic CSI measurement and/or reporting, and a seventh cycle is a reporting cycle for the periodic CSI measurement and/or reporting; a fourth time window is a WUS activation window, and a fourth cycle is a WUS cycle.

### a. first situation.

The seventh cycle is equal to the fourth cycle, and a time domain relationship between the seventh time window and the fourth time window includes at least one of the following:
a start timing of the seventh time window is not earlier than a start timing of the fourth time window;
an end timing of the seventh time window is not later than an end timing of the fourth time window;
the end timing of the seventh time window is not later than a start timing of a data transmission;
an interval between the start timing of the seventh time window and the start timing of the fourth time window satisfies a first time threshold condition corresponding to the WUS;
an interval between the end timing of the seventh time window and the end timing of the fourth time window satisfies a second time threshold condition corresponding to the WUS; and
an interval between the end timing of the seventh time window and the start timing of the data transmission satisfies a third time threshold condition corresponding to the WUS.

### b. second situation.

The seventh cycle is N times the fourth cycle, N is a positive integer greater than 1, and time domain relationship between the seventh time window and the fourth time window includes at least one of the following:
a start timing of the seventh time window is not earlier than a start timing of N fourth time windows;
an end timing of the seventh time window is not later than an end timing of the N fourth time windows;
the end timing of the seventh time window is not later than the start timing of the data transmission;
an interval between the start timing of the seventh time window and the start timing of the N fourth time windows satisfies a first time threshold condition corresponding to the WUS;
an interval between the end timing of the seventh time window and the end timing of the N fourth time windows satisfies a second time threshold condition corresponding to the WUS; and
an interval between the end timing of the seventh time window and the start timing of the data transmission satisfies a third time threshold condition corresponding to the WUS.

### (2) aperiodic CSI.

A tenth time window is a time window of the aperiodic CSI measurement and/or reporting; the fourth time window is the WUS activation window, and the fourth cycle is the WUS cycle.

A time domain relationship between the tenth time window and the fourth time window includes at least three of the following:
a start timing of the tenth time window is not earlier than the start timing of the fourth time window;
an end timing of the tenth time window is not later than the end timing of the fourth time window;
the end timing of the tenth time window is not later than the start timing of the data transmission;
an interval between the start timing of the tenth time window and the start timing of the fourth time window satisfies a sixth time threshold condition corresponding to the WUS;
an interval between the end timing of the tenth time window and the start timing of the fourth time window satisfies a seventh time threshold condition corresponding to the WUS; and
an interval between the end timing of the tenth time window and the start timing of the data transmission satisfies an eighth time threshold condition corresponding to the WUS.

### (3) semi-persistent CSI.

A start point of a ninth cycle is an activation time point of the semi-persistent CSI measurement and/or reporting, an end point of the ninth cycle is a deactivation time point of the CSI, and a ninth time window is an activation time window within the ninth cycle; the fourth time window is the WUS activation window, and the fourth cycle is the WUS cycle.

A time domain relationship between the ninth time window and the fourth time window includes at least three of the following:
a start timing of the ninth time window is not earlier than the start timing of the fourth time window;
an end timing of the ninth time window is not later than the end timing of the fourth time window;
an interval between the start timing of the ninth time window and the start timing of the fourth time window satisfies a fourth time threshold condition corresponding to the WUS;
an interval between the end timing of the ninth time window and the start timing of the fourth time window satisfies a fifth time threshold condition corresponding to the WUS;
the activation time point is not earlier than a start timing of an Mth fourth time window, M is an integer greater than 0; and
the deactivation time point is not later than an end timing of the Mth fourth time window, M is an integer greater than 0.

Embodiment 4: configuration for a physical downlink control channel (PDCCH) skipping.

### (1) periodic channel state information (CSI) measurement and/or reporting.

A seventh time window is a time window for the periodic CSI measurement and/or reporting, and a seventh cycle is a reporting cycle for the periodic CSI measurement and/or reporting; a fifth time window is an activation window of the PDCCH skipping, and a fifth cycle is a PDCCH skipping cycle.

### a. first situation.

The seventh cycle is equal to the fifth cycle, and a time domain relationship between the seventh time window and the fifth time window includes at least one of the following:
a start timing of the seventh time window is not earlier than a start timing of the fifth time window;
an end timing of the seventh time window is not later than an end timing of the fifth time window;
the end timing of the seventh time window is not later than a start timing of a data transmission;
an interval between the start timing of the seventh time window and the start timing of the fifth time window satisfies a first time threshold condition corresponding to the PDDCH skipping;
an interval between the end timing of the seventh time window and the end timing of the fifth time window satisfies a second time threshold condition corresponding to the PDDCH skipping; and
an interval between the end timing of the seventh time window and the start timing of the data transmission satisfies a third time threshold condition corresponding to the PDDCH skipping.

### b. second situation.

The seventh cycle is N times the fifth cycle, N is an integer greater than 1, and time domain relationship between the seventh time window and the fifth time window includes at least one of the following:
a start timing of the seventh time window is not earlier than a start timing of N fifth time windows;
an end timing of the seventh time window is not later than an end timing of the N fifth time windows;
the end timing of the seventh time window is not later than a start timing of a data transmission;
an interval between the start timing of the seventh time window and the start timing of the N fifth time windows satisfies a first time threshold condition corresponding to the PDDCH skipping;
an interval between the end timing of the seventh time window and the end timing of the N fifth time windows satisfies a second time threshold condition corresponding to the PDDCH skipping; and
an interval between the end timing of the seventh time window and the start timing of the data transmission satisfies a third time threshold condition corresponding to the PDDCH skipping.

### (2) aperiodic CSI.

A tenth time window is a time window of the aperiodic CSI measurement and/or reporting; the fifth time window is the activation window of the PDCCH skipping, and the fifth cycle is the PDCCH skipping cycle.

A time domain relationship between the tenth time window and the fifth time window includes at least one of the following:
a start timing of the tenth time window is not earlier than the start timing of the fifth time window;
an end timing of the tenth time window is not later than the end timing of the fifth time window;
the end timing of the tenth time window is not later than the start timing of the data transmission;
an interval between the start timing of the tenth time window and the start timing of the fifth time window satisfies a sixth time threshold condition corresponding to the PDDCH skipping;
an interval between the end timing of the tenth time window and the start timing of the fifth time window satisfies a seventh time threshold condition corresponding to the PDDCH skipping; and
an interval between the end timing of the tenth time window and the start timing of the data transmission satisfies an eighth time threshold condition corresponding to the PDDCH skipping.

### (3) semi-persistent CSI measurement and/or reporting.

A start point of a ninth cycle is an activation time point of the semi-persistent CSI measurement and/or reporting, an end point of the ninth cycle is a deactivation time point of the CSI, and a ninth time window is an activation time window within the ninth cycle; the fifth time window is the activation window of the PDCCH skipping, and the fifth cycle is the PDCCH skipping cycle.

A time domain relationship between the ninth time window and the fifth time window includes at least one of the following:
a start timing of the ninth time window is not earlier than the start timing of the fifth time window;
an end timing of the ninth time window is not later than the end timing of the fifth time window;
an interval between the start timing of the ninth time window and the start timing of the fifth time window satisfies a fourth time threshold condition corresponding to the PDCCH skipping;
an interval between the end timing of the ninth time window and the start timing of the fifth time window satisfies a fifth time threshold condition corresponding to the PDCCH skipping;
the activation time point is not earlier than a start timing of an Mth fifth time window, M is an integer greater than 0; and
the deactivation time point is not later than an end timing of the Mth fifth time window, M is an integer greater than 0.

Embodiment 5: configuration for a search space switching.

### (1) periodic channel state information (CSI) measurement and/or reporting.

A seventh time window is a time window for a periodic CSI measurement and/or reporting, and a seventh cycle is a reporting cycle for the periodic CSI measurement and/or reporting; a sixth time window is a search space activation window, and a sixth cycle is a search space monitoring cycle.

### a. first situation.

The seventh cycle is equal to the sixth cycle, and a time domain relationship between the seventh time window and the sixth time window includes at least one of the following:
a start timing of the seventh time window is not earlier than a start timing of the sixth time window;
an end timing of the seventh time window is not later than an end timing of the sixth time window;
the end timing of the seventh time window is not later than a start timing of a data transmission;
an interval between the start timing of the seventh time window and the start timing of the sixth time window satisfies a first time threshold condition corresponding to the search space;
an interval between the end timing of the seventh time window and the end timing of the sixth time window satisfies a second time threshold condition corresponding to the search space; and
an interval between the end timing of the seventh time window and the start timing of the data transmission satisfies a third time threshold condition corresponding to the search space.

### b. second situation.

The seventh cycle is N times the sixth cycle, N is an integer greater than 1, and time domain relationship between the seventh time window and the sixth time window includes at least one of the following:
a start timing of the seventh time window is not earlier than a start timing of N sixth time windows;
an end timing of the seventh time window is not later than an end timing of the N sixth time windows;
the end timing of the seventh time window is not later than a start timing of a data transmission;
an interval between the start timing of the seventh time window and the start timing of the N sixth time windows satisfies a first time threshold condition corresponding to the search space;
an interval between the end timing of the seventh time window and the end timing of the N sixth time windows satisfies a second time threshold condition corresponding to the search space; and
an interval between the end timing of the seventh time window and the start timing of the data transmission satisfies a third time threshold condition corresponding to the search space.

### (2) aperiodic CSI.

A tenth time window is a time window of the aperiodic CSI measurement and/or reporting; the sixth time window is the search space activation window, and the sixth cycle is the search space monitoring cycle.

A time domain relationship between the tenth time window and the sixth time window includes at least one of the following:
a start timing of the tenth time window is not earlier than the start timing of the sixth time window;
an end timing of the tenth time window is not later than the end timing of the sixth time window;
the end timing of the tenth time window is not later than the start timing of the data transmission;
an interval between the start timing of the tenth time window and the start timing of the sixth time window satisfies a sixth time threshold condition corresponding to the search space;
an interval between the end timing of the tenth time window and the start timing of the sixth time window satisfies a seventh time threshold condition corresponding to the search space; and
an interval between the end timing of the tenth time window and the start timing of the data transmission satisfies an eighth time threshold condition corresponding to the search space.

### (3) semi-persistent CSI.

A start point of a ninth cycle is an activation time point of the semi-persistent CSI measurement and/or reporting, an end point of the ninth cycle is a deactivation time point of the CSI, and a ninth time window is an activation time window within the ninth cycle; the sixth time window is the search space activation window, and the sixth cycle is the search space monitoring cycle.

A time domain relationship between the ninth time window and the sixth time window includes at least one of the following:
a start timing of the ninth time window is not earlier than the start timing of the sixth time window;
an end timing of the ninth time window is not later than the end timing of the sixth time window;
an interval between the start timing of the ninth time window and the start timing of the sixth time window satisfies a fourth time threshold condition corresponding to the search space;
an interval between the end timing of the ninth time window and the start timing of the sixth time window satisfies a fifth time threshold condition corresponding to the search space;
the activation time point is not earlier than a start timing of an Mth sixth time window, M is an integer greater than 0; and
the deactivation time point is not later than an end timing of the Mth sixth time window, M is an integer greater than 0.

Embodiment 6: configuration for a physical downlink control channel (PDDCH) monitoring window or opportunity for a dedicated service, and a discontinuous reception (DRX).

### (1) periodic channel state information (CSI) measurement and/or reporting.

A seventh time window is a time window for the periodic CSI measurement and/or reporting, and a seventh cycle is a reporting cycle for the periodic CSI measurement and/or reporting;
a first time window is the PDDCH monitoring window or opportunity for the dedicated service, and a first cycle is a cycle for the PDDCH monitoring window or opportunity for the dedicated service. The dedicated service may be an extended reality (XR) service; and
a sixth time window is the search space activation window, and a sixth cycle is the search space monitoring cycle.

Configuration information corresponding to DRX includes a second time window and a second cycle, and/or a third time window and a third cycle, where the second cycle is a long DRX cycle, the second time window is a DRX activation window within the long DRX cycle, the third cycle is a short DRX cycle, and the third time window is a DRX activation window within the short DRX cycle.

### a. first situation.

The seventh cycle is a minimum value between the first cycle, the second cycle and the third cycle. For example, as shown in FIG. 18, the minimum value is the short DRX cycle.

A time domain relationship between the seventh time window and a time window corresponding to the minimum value includes at least one of the following:
a start timing of the seventh time window is not earlier than a start timing of the time window corresponding to the minimum value;
an end timing of the seventh time window is not later than an end timing of the time window corresponding to the minimum value;
the end timing of the seventh time window is not later than a start timing of a data transmission;
an interval between the start timing of the seventh time window and the start timing of the time window corresponding to the minimum value satisfies a ninth time threshold condition;
an interval between the end timing of the seventh time window and the end timing of the time window corresponding to the minimum value satisfies a tenth time threshold condition; and
an interval between the end timing of the seventh time window and the start timing of the data transmission satisfies an eleventh time threshold condition.

### b. second situation.

The seventh cycle is any one cycle of the first cycle, the second cycle and the third cycle. For example, as shown in FIG. 19, the any one cycle is the first cycle, that is, the cycle for the PDDCH monitoring window or opportunity for the dedicated service.

A start timing of the seventh time window is not earlier than a start timing of the first time window; or, a start timing of the seventh time window is not earlier than a start timing of the second time window;
an end timing of the seventh time window is not later than an end timing of the first time window; or, an end timing of the seventh time window is not later than an end timing of the second time window;
the end timing of the seventh time window is not later than a start timing of a data transmission;
an interval between the start timing of the seventh time window and the start timing of the first time window satisfies a twelfth time threshold condition; or, an interval between the seventh time window and the start timing of the second time window satisfies a thirteenth time threshold condition;
an interval between the end timing of the seventh time window and the end timing of the first time window satisfies a fourteenth time threshold condition; or, an interval between the start timing of the seventh time window and the start timing of the second time window satisfies a fifteenth time threshold condition; and
an interval between the end timing of the seventh time window and the start timing of the data transmission satisfies a sixteenth time threshold condition.

### (2) aperiodic CSI.

A tenth time window is a time window of the aperiodic CSI measurement and/or reporting;
the first time window is the PDDCH monitoring window or opportunity for the dedicated service, and the first cycle is the cycle for the PDDCH monitoring window or opportunity for the dedicated service. The dedicated service may be the XR service; and
the sixth time window is the search space activation window, and the sixth cycle is the search space monitoring cycle.

The configuration information corresponding to DRX includes the second time window and the second cycle, and/or the third time window and the third cycle, where the second cycle is the long DRX cycle, the second time window is the DRX activation window within the long DRX cycle, the third cycle is the short DRX cycle, and the third time window is the DRX activation window within the short DRX cycle.

A time domain relationship between the tenth time window, the first time window and the second time window includes at least one of the following:
a start timing of the tenth time window is not earlier than the start timing of the first time window; or, a start timing of the tenth time window is not earlier than the start timing of the second time window;
an end timing of the tenth time window is not later than the end timing of the first time window; or, an end timing of the tenth time window is not later than the end timing of the second time window or the third time window;
the end timing of the tenth time window is not later than the start timing of the data transmission;
an interval between the start timing of the tenth time window and the start timing of the first time window satisfies a nineteenth time threshold condition; or, an interval between the start timing of the tenth time window and the start timing of the second time window or the third time window satisfies a twentieth time threshold condition;
an interval between the end timing of the tenth time window and the end timing of the first time window satisfies a twenty-first time threshold condition; or, an interval between the start timing of the tenth time window and the start timing of the second time window or the third time window satisfies a twenty-second time threshold condition; and
an interval between the end timing of the tenth time window and the start timing of the data transmission satisfies a twenty-third time threshold condition.

It should be noted that, the tenth time window may be configured as any activation time window in the first cycle, the short DRX cycle and the long DRX cycle. In case that activation time windows corresponding to the first cycle, the short DRX cycle and the long DRX cycle overlap, for the overlapping part, an activation time window corresponding an earliest signal/data may be selected as the tenth time window.

### (3) semi-persistent CSI.

A start point of a ninth cycle is an activation time point of the semi-persistent CSI measurement and/or reporting, an end point of the ninth cycle is a deactivation time point of the CSI, and a ninth time window is an activation time window within the ninth cycle;
the first time window is the PDDCH monitoring window or opportunity for the dedicated service, and the first cycle is the cycle for the PDDCH monitoring window or opportunity for the dedicated service. The dedicated service may be the XR service; and
the sixth time window is the search space activation window, and the sixth cycle is the search space monitoring cycle.

A time domain relationship between the ninth time window, the first time window and the second time window or the third time window includes at least one of the following:
a start timing of the ninth time window is not earlier than a first timing, where the first timing is an earliest start timing between the start timing of the first time window and the start timing of the second time window or the third time window;
an end timing of the ninth time window is not later than a second timing, where the second timing is a latest end timing between the end timing of the first time window and the end timing of the second time window or the third time window;
an interval between the start timing of the ninth time window and a first value satisfies a seventeenth time threshold condition, where the first value is an interval between the start timing of the first time window and the start timing of the second time window or the third time window;
an interval between the end timing of the ninth time window and a second value satisfies an eighteenth time threshold condition, where the second value is an interval between the end timing of the first time window and the end timing of the second time window or the third time window;
the activation time point is not earlier than a third value, where the third value is a start timing of an Mth first time window, or a start timing of an Mth second time window or an Mth third time window, M is an integer greater than 0; and
the deactivation time point is not later than a fourth value, where the fourth value is an end timing of the Mth first time window, or an end timing of the Mth second time window or the Mth third time window, M is an integer greater than 0.

Embodiment 7: configuration for a physical downlink control channel (PDDCH) monitoring window or opportunity for a dedicated service, a discontinuous reception (DRX), and a wake-up signal (WUS).

Configuration procedures for a periodic channel state information (CSI) measurement and/or reporting, an aperiodic CSI measurement and/or reporting, and a semi-persistent CSI measurement and/or reporting are similar to the above-mentioned embodiments 1 to 6, differences are the following.

A target cycle may be determined based on a cycle for the PDDCH monitoring window or opportunity for the dedicated service, a long DRX cycle, a short DRX cycle, and a WUS cycle. For example, select a minimum value between any two cycles from these cycles, or select any one cycle from these cycles as a seventh cycle.

A target time window may be determined based on the PDDCH monitoring window or opportunity for the dedicated service, a DRX activation window within the long DRX cycle, a DRX activation window within the short DRX cycle, and a WUS activation window. For example, select an earliest start timing between at least two time windows from these time windows, and select a latest timing between at least two time windows from these time windows; or, select a start timing and an end timing of any one time window from these time windows.

It should be noted that: the target cycle may refer to the seventh cycle for periodic CSI measurement and/or reporting, the ninth cycle for semi-persistent CSI measurement and/or reporting, and the tenth cycle for aperiodic CSI measurement and/or reporting.

Correspondingly, the target time window may refer to the seventh time window for periodic CSI measurement and/or reporting, the ninth time window for the CSI, and the tenth time window for the aperiodic CSI.

For example, the seventh cycle may be determined based on a cycle for the PDDCH monitoring window or opportunity for the dedicated service, the long DRX cycle, the short DRX cycle, and the WUS cycle. For example, a minimum value between at least two cycles from these cycles, or any one cycle from these cycles may be selected as the seventh cycle.

For another example, the seventh time window may be determined based on the PDDCH monitoring window or opportunity for the dedicated service, the DRX activation window within the long DRX cycle, the DRX activation window within the short DRX window, and the WUS activation window. For example, select the earliest start timing between at least two time windows from these time windows, and select the latest timing between at least two time windows from these time windows; or, select the start timing and the end timing of any one time window from these time windows.

For another example, the seventh cycle is associated with an DRX activation cycle, if the WUS indicates to skip the DRX, the terminal may perform at least one of the following operations:
skipping the CSI measurement and/or reporting;
still performing the CSI measurement and/or reporting during an DRX non-activation period; and
skipping the CSI measurement and/or reporting in the DRX, and performing the CSI measurement and/or reporting in a next first time window.

Embodiment 8: configuration for a physical downlink control channel (PDDCH) monitoring window or opportunity for a dedicated service, a PDCCH skipping, a discontinuous reception (DRX), and a wake-up signal (WUS).

Configuration procedures for a periodic channel state information (CSI) measurement and/or reporting, an aperiodic CSI and a semi-persistent CSI are similar to the above-mentioned embodiments 1 to 6, differences are the following.

A target cycle may be determined based on a cycle for the PDDCH monitoring window or opportunity for the dedicated service, a PDCCH skipping cycle, a long DRX cycle, a short DRX cycle, and a WUS cycle. For example, select a minimum value between any two cycles from these cycles, or select any one cycle from these cycles as a seventh cycle.

A target time window may be determined based on the PDDCH monitoring window or opportunity for the dedicated service, a DRX activation window within the long DRX cycle, a DRX activation window within the short DRX cycle, and a WUS activation window. For example, select an earliest start timing between at least two time windows from these time windows, and select a latest timing between at least two time windows from these time windows; or, select a start timing and an end timing of any one time window from these time windows.

It should be noted that: the target cycle may refer to the seventh cycle for periodic CSI measurement and/or reporting, the ninth cycle for semi-persistent CSI, and the tenth cycle for aperiodic CSI.

Correspondingly, the target time window may refer to the seventh time window for periodic CSI measurement and/or reporting, the ninth time window for semi-persistent CSI measurement and/or reporting, and the tenth time window for aperiodic CSI measurement and/or reporting.

Embodiment 9: configuration for a physical downlink control channel (PDDCH) monitoring window or opportunity for a dedicated service, a search space switching, a discontinuous reception (DRX), and a wake-up signal (WUS).

Configuration procedures for a periodic channel state information (CSI) measurement and/or reporting, an aperiodic CSI measurement and/or reporting, and a semi-persistent CSI measurement and/or reporting are similar to the above-mentioned embodiments 1 to 6, differences are the following.

A target cycle may be determined based on a cycle for the PDDCH monitoring window or opportunity for the dedicated service, a search space monitoring cycle, a long DRX cycle, a short DRX cycle, and a WUS cycle. For example, select a minimum value between any two cycles from these cycles, or select any one cycle from these cycles as a seventh cycle.

A target time window may be determined based on the PDDCH monitoring window or opportunity for the dedicated service, a DRX activation window within the long DRX cycle, an activation window of the search space, a DRX activation window within the short DRX cycle, and a WUS activation window. For example, select an earliest start timing between at least two time windows from these time windows, and select a latest timing between at least two time windows from these time windows; or, select a start timing and an end timing of any one time window from these time windows.

It should be noted that: the target cycle may refer to the seventh cycle for periodic CSI measurement and/or reporting, the ninth cycle for semi-persistent CSI, and the tenth cycle for aperiodic CSI.

Correspondingly, the target time window may refer to the seventh time window for periodic CSI measurement and/or reporting, the ninth time window for semi-persistent CSI measurement and/or reporting, and the tenth time window for aperiodic CSI measurement and/or reporting.

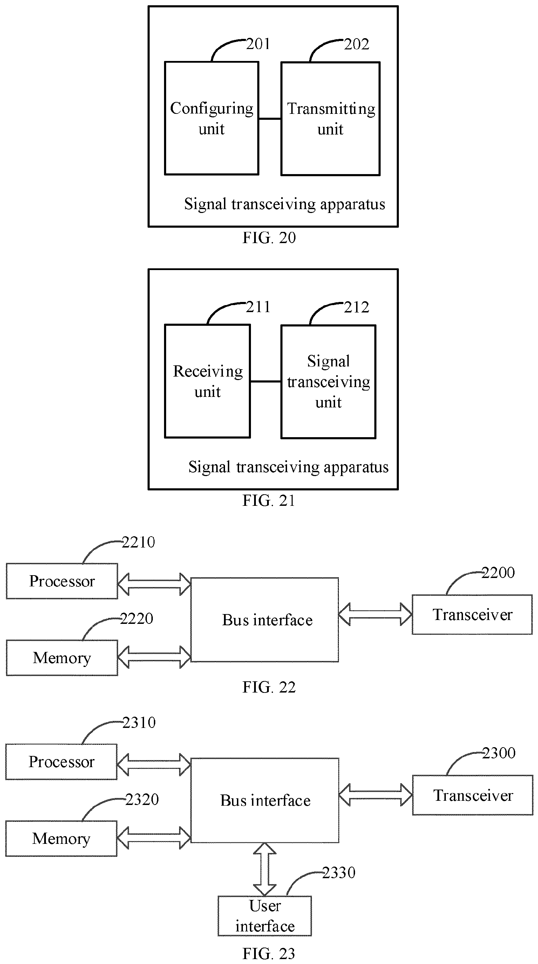

FIG. 20 is a first schematic structural diagram of a signal transceiving apparatus according to an embodiment of the present application, the apparatus may apply to a network device, such as a base station. As shown in FIG. 20, the signal transceiving apparatus may include the following units:
a configuring unit 201, used for generating configuration information used for signal transceiving, where the configuration information includes information corresponding to at least two transceiving mechanisms, and the at least two transceiving mechanisms include a first transceiving mechanism representing channel state information (CSI) measurement and/or reporting; and
a transmitting unit 202, used for transmitting the configuration information to a terminal, to make the terminal perform signal transceiving based on the configuration information.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as USB flash disk, mobile hard disk, read-only memory (ROM), random access memory (RAM), magnetic disk, or optical disk.

It should be noted that, the above apparatus according to the embodiments of the present application is able to perform all the method steps in the above-mentioned network device side method embodiments, and achieve the same effect. The same parts and beneficial effects as the method embodiments are not repeated here.

FIG. 21 is a second schematic structural diagram of a signal transceiving apparatus according to an embodiment of the present application, the signal transceiving apparatus may apply to a terminal device. As shown in FIG. 21, the signal transceiving apparatus may include the following units:
a receiving unit 211, used for receiving configuration information used for signal transceiving, where the configuration information includes information corresponding to at least two transceiving mechanisms, and the at least two transceiving mechanisms include a first transceiving mechanism representing channel state information (CSI) measurement and/or reporting; and
a signal transceiving unit 212, used for performing signal transceiving based on the configuration information.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as USB flash disk, mobile hard disk, read-only memory (ROM), random access memory (RAM), magnetic disk, or optical disk.

It should be noted that, the above apparatus according to the embodiments of the present application is able to perform all the method steps in the above-mentioned terminal device side method embodiments, and achieve the same effect. The same parts and beneficial effects as the method embodiments are not repeated here.

FIG. 22 is a schematic structural diagram of a network device according to an embodiment of the present application. The network device may be used for performing signal transceiving method shown in FIG. 4. As shown in FIG. 22, a transceiver 2200 is used for transmitting and receiving data under control of a processor 2210.

In FIG. 22, a bus architecture may include any number of interconnected buses and bridges, which are linked together through various circuits of one or more processors represented by the processor 2210 and one or more memories represented by a memory 2220. The bus architecture may also link together various other circuits, such as peripherals, voltage regulators, and power management circuits, which are well-known in the art and therefore will not be further described herein. The bus interface provides an interface. The transceiver 2200 may include multiple elements, i.e., include a transmitter and a receiver, units for providing communication with various other devices over transmission media including wireless channels, wired channels, fiber optic cables, and the like. The processor 2210 is responsible for managing the bus architecture and general processing, and the memory 2220 may store data used by the processor 2210 when performing operations.

The processor 2210 may be a central processing unit (CPU), an application specific integrated circuit (ASIC), a field-programmable gate array (FPGA), or a complex programmable logic device (CPLD), the processor may also use a multi-core architecture.

FIG. 23 is a schematic structural diagram of a terminal device according to an embodiment of the present application, the terminal device may be used for performing the signal transceiving method shown in FIG. 13. As shown in FIG. 23, a transceiver 2300 is used for transmitting and receiving data under control of a processor 2310. In FIG. 23, a bus architecture may include any number of interconnected buses and bridges, which are linked together through various circuits of one or more processors represented by the processor 2310 and one or more memories represented by a memory 2320. The bus architecture may also link together various other circuits, such as peripherals, voltage regulators, and power management circuits, which are well-known in the art and therefore will not be further described herein. The bus interface provides an interface. The transceiver 2300 may include multiple elements, i.e., include a transmitter and a receiver, and units for providing communication with various other devices over transmission media including wireless channels, wired channels, fiber optic cables, and the like. The user interface 2330 may also be an interface capable of connecting external and internal devices, including but not limited to small keyboards, displays, speakers, microphones, joysticks, etc.

The processor 2310 is responsible for managing the bus architecture and general processing, and the memory 2320 may store data used by the processor 2310 when performing operations.

In an embodiment, the processor 2310 may be a central processing unit (CPU), an application specific integrated circuit (ASIC), a field-programmable gate array (FPGA), or a complex programmable logic device (CPLD), the processor may also use a multi-core architecture.

The processor is used for performing any one of the methods according to the embodiments of the present application based on an obtained executable instruction by invoking a computer program stored in the memory. The processor and the memory may also be physically separated.

Embodiments of the present application further provide a processor-readable storage medium storing computer programs that are used for causing a processor to perform the methods according to each of the above-mentioned embodiments, including:
generating configuration information used for signal transceiving, where the configuration information includes information corresponding to at least two transceiving mechanisms, and the at least two transceiving mechanisms include a first transceiving mechanism representing channel state information (CSI) measurement and/or reporting; and
transmitting the configuration information to a terminal, to make the terminal perform signal transceiving based on the configuration information.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Embodiments of the present application further provide a processor-readable storage medium storing computer programs that are used for causing a processor to perform the methods according to each of the above-mentioned embodiments, including:
receiving configuration information used for signal transceiving, where the configuration information includes information corresponding to at least two transceiving mechanisms, and the at least two transceiving mechanisms include a first transceiving mechanism representing channel state information (CSI) measurement and/or reporting; and
performing signal transceiving based on the configuration information.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations can be made in the present application without departing from the scope of the present application. Thus, provided that these modifications and variations of the present application are within the scope of the claims of the present application and their equivalents, the present application is also intended to cover such modifications and variations.

## Claims

1. A signal transceiving method, applied to a network device, comprising:
generating configuration information used for signal transceiving, wherein the configuration information comprises information corresponding to at least two transceiving mechanisms, and the at least two transceiving mechanisms comprise a first transceiving mechanism representing channel state information, CSI, measurement and/or reporting; and
transmitting the configuration information to a terminal, to make the terminal perform signal transceiving based on the configuration information.

2. The method of claim 1, wherein the at least two transceiving mechanisms further comprise one or more of the following:
a second transceiving mechanism representing a physical downlink control channel, PDCCH, monitoring window or opportunity for a dedicated service;
a third transceiving mechanism representing a discontinuous reception, DRX;
a fourth transceiving mechanism representing a wake-up signal, WUS;
a fifth transceiving mechanism representing a PDCCH skipping; and
a sixth transceiving mechanism representing a search space switching.

3. The method of claim 2, wherein
information corresponding to the second transceiving mechanism comprises a first time window, or a first time window and a first cycle, wherein the first time window is the PDDCH monitoring window or opportunity for the dedicated service, and the first cycle is a cycle for the PDDCH monitoring window or opportunity for the dedicated service;
information corresponding to the third transceiving mechanism comprises a second time window and a second cycle, and/or a third time window and a third cycle, wherein the second cycle is a long DRX cycle, the second time window is a DRX activation window within the long DRX cycle, the third cycle is a short DRX cycle, and the third time window is a DRX activation window within the short DRX cycle;
information corresponding to the fourth transceiving mechanism comprises a fourth time window and a fourth cycle, wherein the fourth time window is a WUS activation window, and the fourth cycle is a WUS cycle;
information corresponding to the fifth transceiving mechanism comprises a fifth time window and a fifth cycle, wherein the fifth time window is a PDCCH skipping activation window, and the fifth cycle is a PDCCH skipping cycle; and
information corresponding to the sixth transceiving mechanism comprises a sixth time window and a sixth cycle, wherein the sixth time window is a search space activation window, and the sixth cycle is a search space monitoring cycle.

4. The method of claim 2 or 3, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle;
the seventh cycle is N times the eighth cycle, wherein in case that the seventh transceiving mechanism is the third transceiving mechanism, N is an integer greater than 1; and in case that the seventh transceiving mechanism is any one of the second transceiving mechanism, the fourth transceiving mechanism, the fifth transceiving mechanism and the sixth transceiving mechanism, N is an integer greater than or equal to 1; and
a time domain relationship between the seventh time window and the eighth time window comprises at least one of the following:
a start timing of the seventh time window is not earlier than a start timing of N eighth time windows;
an end timing of the seventh time window is not later than an end timing of N eighth time windows;
the end timing of the seventh time window is not later than a start timing of a data transmission;
an interval between the start timing of the seventh time window and the start timing of the N eighth time windows satisfies a first time threshold condition;
an interval between the end timing of the seventh time window and the end timing of the N eighth time windows satisfies a second time threshold condition; and
an interval between the end timing of the seventh time window and the start timing of the data transmission satisfies a third time threshold condition.

5. The method of claim 2 or 3, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle; and
a time domain relationship between the ninth time window and the eighth time window comprises at least one of the following:
a start timing of the ninth time window is not earlier than a start timing of the eighth time window;
an end timing of the ninth time window is not later than an end timing of the eighth time window;
an interval between the start timing of the ninth time window and the start timing of the eighth time window satisfies a fourth time threshold condition;
an interval between the end timing of the ninth time window and the start timing of the eighth time window satisfies a fifth time threshold condition;
the activation time point is not earlier than a start timing of an Mth eighth time window, M is an integer greater than 0; and
the deactivation time point is not later than an end timing of the Mth eighth time window, M is an integer greater than 0.

6. The method of claim 2 or 3, wherein configuration information corresponding to the first transceiving mechanism comprises a tenth time window, wherein the tenth time window is a time window for an aperiodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle; and
a time domain relationship between the tenth time window and the eighth time window comprises at least one of the following:
a start timing of the tenth time window is not earlier than a start timing of the eighth time window;
an end timing of the tenth time window is not later than an end timing of the eighth time window;
the end timing of the tenth time window is not later than a start timing of a data transmission;
an interval between the start timing of the tenth time window and the start timing of the eighth time window satisfies a sixth time threshold condition;
an interval between the end timing of the tenth time window and the start timing of the eighth time window satisfies a seventh time threshold condition; and
an interval between the end timing of the tenth time window and the start timing of the data transmission satisfies an eighth time threshold condition.

7. The method of claim 2 or 3, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism, and the sixth transceiving mechanism; information corresponding to the eighth transceiving mechanism comprises an eleventh time window and an eleventh cycle, and information corresponding to the ninth transceiving mechanism comprises a twelfth time window and a twelfth cycle;
the seventh cycle is a minimum value between the eleventh cycle and the twelfth cycle; and
a time domain relationship between the seventh time window and a time window corresponding to the minimum value comprises at least one of the following:
a start timing of the seventh time window is not earlier than a start timing of the time window corresponding to the minimum value;
an end timing of the seventh time window is not later than an end timing of the time window corresponding to the minimum value;
the end timing of the seventh time window is not later than a start timing of a data transmission;
an interval between the start timing of the seventh time window and the start timing of the time window corresponding to the minimum value satisfies a ninth time threshold condition;
an interval between the end timing of the seventh time window and the end timing of the time window corresponding to the minimum value satisfies a tenth time threshold condition; and
an interval between the end timing of the seventh time window and the start timing of the data transmission satisfies an eleventh time threshold condition.

8. The method of claim 2 or 3, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is any cycle of the eleventh cycle and the twelfth cycle; and
a time domain relationship between the seventh time window and a time window corresponding to the any cycle comprises at least one of the following:
a start timing of the seventh time window is not earlier than a start timing of the eleventh time window, or a start timing of the seventh time window is not earlier than a start timing of the twelfth time window;
an end timing of the seventh time window is not later than an end timing of the eleventh time window, or an end timing of the seventh time window is not later than an end timing of the twelfth time window;
the end timing of the seventh time window is not later than a start timing of a data transmission;
an interval between the start timing of the seventh time window and the start timing of the eleventh time window satisfies a twelfth time threshold condition; or, an interval between the start timing of the seventh time window and the start timing of the twelfth time window satisfies a thirteenth time threshold condition;
an interval between the end timing of the seventh time window and the end timing of the eleventh time window satisfies a fourteenth time threshold condition; or, an interval between the start timing of the seventh time window and the start timing of the twelfth time window satisfies a fifteenth time threshold condition; and
an interval between the end timing of the seventh time window and the start timing of the data transmission satisfies a sixteenth time threshold condition.

9. The method of claim 2 or 3, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle, and
a time domain relationship between the ninth time window, the eleventh time window and the twelfth time window comprises at least one of the following:
a start timing of the ninth time window is not earlier than a first timing, wherein the first timing is an earliest start timing between a start timing of the eleventh time window and a start timing of the twelfth time window;
an end timing of the ninth time window is not later than a second timing, wherein the second timing is a latest end timing between an end timing of the eleventh time window and an end timing of the twelfth time window;
an interval between the start timing of the ninth time window and a first value satisfies a seventeenth time threshold condition, wherein the first value is an interval between the start timing of the eleventh time window and the start timing of the twelfth time window;
an interval between the end timing of the ninth time window and a second value satisfies an eighteenth time threshold condition, wherein the second value is an interval between the end timing of the eleventh time window and the end timing of the twelfth time window;
the activation time point is not earlier than a third value, wherein the third value is a start timing of an Mth eleventh time window, or a start timing of an Mth twelfth time window, M is an integer greater than 0; and
the deactivation time point is not later than a fourth value, wherein the fourth value is an end timing of the Mth eleventh time window, or an end timing of the Mth twelfth time window, M is an integer greater than 0.

10. The method of claim 2 or 3, wherein configuration information corresponding to the first transceiving mechanism comprises a tenth time window, wherein the tenth time window is a time window for an aperiodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the tenth time window is any one of the eleventh time window and the twelfth time window; and
a time domain relationship between the tenth time window, the eleventh time window and the twelfth time window comprises at least one of the following:
a start timing of the tenth time window is not earlier than a start timing of the eleventh time window; or, a start timing of the tenth time window is not earlier than a start timing of the twelfth time window;
an end timing of the tenth time window is not later than an end timing of the eleventh time window; or, an end timing of the tenth timing is not later than an end timing of the twelfth time window;
the end timing of the tenth time window is not later than a start timing of a data transmission;
an interval between the start timing of the tenth time window and the start timing of the eleventh time window satisfies a nineteenth time threshold condition; or, an interval between the start timing of the tenth time window and the start timing of the twelfth time window satisfies a twentieth time threshold condition;
an interval between the end timing of the tenth time window and the end timing of the eleventh time window satisfies a twenty-first time threshold condition; or, an interval between the start timing of the tenth time window and the start timing of the twelfth time window satisfies a twenty-second time threshold condition; and
an interval between the end timing of the tenth time window and the start timing of the data transmission satisfies a twenty-third time threshold condition.

11. The method of any one of claims 1 to 3, further comprising:
performing signal transceiving based on the configuration information.

12. A signal transceiving method, applied to a terminal device, comprising:
receiving configuration information used for signal transceiving, wherein the configuration information comprises information corresponding to at least two transceiving mechanisms, and the at least two transceiving mechanisms comprise a first transceiving mechanism representing channel state information, CSI, measurement and/or reporting; and
performing signal transceiving based on the configuration information.

13. The method of claim 12, wherein the at least two transceiving mechanisms further comprise one or more of the following:
a second transceiving mechanism representing a physical downlink control channel, PDCCH, monitoring window or opportunity for a dedicated service;
a third transceiving mechanism representing a discontinuous reception, DRX;
a fourth transceiving mechanism representing a wake-up signal, WUS;
a fifth transceiving mechanism representing a PDCCH skipping; and
a sixth transceiving mechanism representing a search space switching.

14. The method of claim 13, wherein
information corresponding to the second transceiving mechanism comprises a first time window, or a first time window and a first cycle, wherein the first time window is the PDDCH monitoring window or opportunity for the dedicated service, and the first cycle is a cycle for the PDDCH monitoring window or opportunity for the dedicated service;
information corresponding to the third transceiving mechanism comprises a second time window and a second cycle, and/or a third time window and a third cycle, wherein the second cycle is a long DRX cycle, the second time window is a DRX activation window within the long DRX cycle, the third cycle is a short DRX cycle, and the third time window is a DRX activation window within the short DRX cycle;
information corresponding to the fourth transceiving mechanism comprises a fourth time window and a fourth cycle, wherein the fourth time window is a WUS activation window, and the fourth cycle is a WUS cycle;
information corresponding to the fifth transceiving mechanism comprises a fifth time window and a fifth cycle, wherein the fifth time window is a PDCCH skipping activation window, and the fifth cycle is a PDCCH skipping cycle; and
information corresponding to the sixth transceiving mechanism comprises a sixth time window and a sixth cycle, wherein the sixth time window is a search space activation window, and the sixth cycle is a search space monitoring cycle.

15. The method of claim 13 or 14, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle;
the seventh cycle is N times the eighth cycle, wherein in case that the seventh transceiving mechanism is the third transceiving mechanism, N is an integer greater than 1; and in case that the seventh transceiving mechanism is any one of the second transceiving mechanism, the fourth transceiving mechanism, the fifth transceiving mechanism and the sixth transceiving mechanism, N is an integer greater than or equal to 1; and
a time domain relationship between the seventh time window and the eighth time window comprises at least one of the following:
a start timing of the seventh time window is not earlier than a start timing of N eighth time windows;
an end timing of the seventh time window is not later than an end timing of N eighth time windows;
the end timing of the seventh time window is not later than a start timing of a data transmission;
an interval between the start timing of the seventh time window and the start timing of the N eighth time windows satisfies a first time threshold condition;
an interval between the end timing of the seventh time window and the end timing of the N eighth time windows satisfies a second time threshold condition; and
an interval between the end timing of the seventh time window and the start timing of the data transmission satisfies a third time threshold condition.

16. The method of claim 13 or 14, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle; and
a time domain relationship between the ninth time window and the eighth time window comprises at least one of the following:
a start timing of the ninth time window is not earlier than a start timing of the eighth time window;
an end timing of the ninth time window is not later than an end timing of the eighth time window;
an interval between the start timing of the ninth time window and the start timing of the eighth time window satisfies a fourth time threshold condition;
an interval between the end timing of the ninth time window and the start timing of the eighth time window satisfies a fifth time threshold condition;
the activation time point is not earlier than a start timing of an Mth eighth time window, M is an integer greater than 0; and
the deactivation time point is not later than an end timing of the Mth eighth time window, M is an integer greater than 0.

17. The method of claim 13 or 14, wherein configuration information corresponding to the first transceiving mechanism comprises a tenth time window, wherein the tenth time window is a time window for an aperiodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle; and
a time domain relationship between the tenth time window and the eighth time window comprises at least one of the following:
a start timing of the tenth time window is not earlier than a start timing of the eighth time window;
an end timing of the tenth time window is not later than an end timing of the eighth time window;
the end timing of the tenth time window is not later than a start timing of a data transmission;
an interval between the start timing of the tenth time window and the start timing of the eighth time window satisfies a sixth time threshold condition;
an interval between the end timing of the tenth time window and the start timing of the eighth time window satisfies a seventh time threshold condition; and
an interval between the end timing of the tenth time window and the start timing of the data transmission satisfies an eighth time threshold condition.

18. The method of claim 13 or 14, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is a minimum value between the eleventh cycle and the twelfth cycle; and
a time domain relationship between the seventh time window and a time window corresponding to the minimum value comprises at least one of the following:
a start timing of the seventh time window is not earlier than a start timing of the time window corresponding to the minimum value;
an end timing of the seventh time window is not later than an end timing of the time window corresponding to the minimum value;
the end timing of the seventh time window is not later than a start timing of a data transmission;
an interval between the start timing of the seventh time window and the start timing of the time window corresponding to the minimum value satisfies a ninth time threshold condition;
an interval between the end timing of the seventh time window and the end timing of the time window corresponding to the minimum value satisfies a tenth time threshold condition; and
an interval between the end timing of the seventh time window and the start timing of the data transmission satisfies an eleventh time threshold condition.

19. The method of claim 13 or 14, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is any cycle of the eleventh cycle and the twelfth cycle; and
a time domain relationship between the seventh time window and a time window corresponding to the any cycle comprises at least one of the following:
a start timing of the seventh time window is not earlier than a start timing of the eleventh time window, or a start timing of the seventh time window is not earlier than a start timing of the twelfth time window;
an end timing of the seventh time window is not later than an end timing of the eleventh time window, or an end timing of the seventh time window is not later than an end timing of the twelfth time window;
the end timing of the seventh time window is not later than a start timing of a data transmission;
an interval between the start timing of the seventh time window and the start timing of the eleventh time window satisfies a twelfth time threshold condition; or, an interval between the start timing of the seventh time window and the start timing of the twelfth time window satisfies a thirteenth time threshold condition;
an interval between the end timing of the seventh time window and the end timing of the eleventh time window satisfies a fourteenth time threshold condition; or, an interval between the start timing of the seventh time window and the start timing of the twelfth time window satisfies a fifteenth time threshold condition; and
an interval between the end timing of the seventh time window and the start timing of the data transmission satisfies a sixteenth time threshold condition.

20. The method of claim 13 or 14, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle; and
a time domain relationship between the ninth time window, the eleventh time window and the twelfth time window comprises at least one of the following:
a start timing of the ninth time window is not earlier than a first timing, wherein the first timing is an earliest start timing between a start timing of the eleventh time window and a start timing of the twelfth time window;
an end timing of the ninth time window is not later than a second timing, wherein the second timing is a latest end timing between an end timing of the eleventh time window and an end timing of the twelfth time window;
an interval between the start timing of the ninth time window and a first value satisfies a seventeenth time threshold condition, wherein the first value is an interval between the start timing of the eleventh time window and the start timing of the twelfth time window;
an interval between the end timing of the ninth time window and a second value satisfies an eighteenth time threshold condition, wherein the second value is an interval between the end timing of the eleventh time window and the end timing of the twelfth time window;
the activation time point is not earlier than a third value, wherein the third value is a start timing of an Mth eleventh time window, or a start timing of an Mth twelfth time window, M is an integer greater than 0; and
the deactivation time point is not later than a fourth value, wherein the fourth value is an end timing of the Mth eleventh time window, or an end timing of the Mth twelfth time window, M is an integer greater than 0.

21. The method of claim 13 or 14, wherein configuration information corresponding to the first transceiving mechanism comprises a tenth time window, wherein the tenth time window is a time window for an aperiodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the tenth time window is any one of the eleventh time window and the twelfth time window; and
a time domain relationship between the tenth time window, the eleventh time window and the twelfth time window comprises at least one of the following:
a start timing of the tenth time window is not earlier than a start timing of the eleventh time window; or, a start timing of the tenth time window is not earlier than a start timing of the twelfth time window;
an end timing of the tenth time window is not later than an end timing of the eleventh time window; or, an end timing of the tenth timing is not later than an end timing of the twelfth time window;
the end timing of the tenth time window is not later than a start timing of a data transmission;
an interval between the start timing of the tenth time window and the start timing of the eleventh time window satisfies a nineteenth time threshold condition; or, an interval between the start timing of the tenth time window and the start timing of the twelfth time window satisfies a twentieth time threshold condition;
an interval between the end timing of the tenth time window and the end timing of the eleventh time window satisfies a twenty-first time threshold condition; or, an interval between the start timing of the tenth time window and the start timing of the twelfth time window satisfies a twenty-second time threshold condition; and
an interval between the end timing of the tenth time window and the start timing of the data transmission satisfies a twenty-third time threshold condition.

22. A network device, comprising a memory, a transceiver and a processor,
wherein the memory is used for storing a computer program; the transceiver is used for transmitting and receiving data under control of the processor; and the processor is used for invoking the computer program stored in the memory and performing the following operations:
generating configuration information used for signal transceiving, wherein the configuration information comprises information corresponding to at least two transceiving mechanisms, and the at least two transceiving mechanisms comprise a first transceiving mechanism representing channel state information, CSI, measurement and/or reporting; and
transmitting the configuration information to a terminal, to make the terminal perform signal transceiving based on the configuration information.

23. The network device of claim 22, wherein the at least two transceiving mechanisms further comprise one or more of the following:
a second transceiving mechanism representing a physical downlink control channel, PDCCH, monitoring window or opportunity for a dedicated service;
a third transceiving mechanism representing a discontinuous reception, DRX;
a fourth transceiving mechanism representing a wake-up signal, WUS;
a fifth transceiving mechanism representing a PDCCH skipping; and
a sixth transceiving mechanism representing a search space switching.

24. The network device of claim 23, wherein
information corresponding to the second transceiving mechanism comprises a first time window, or a first time window and a first cycle, wherein the first time window is the PDDCH monitoring window or opportunity for the dedicated service, and the first cycle is a cycle for the PDDCH monitoring window or opportunity for the dedicated service;
information corresponding to the third transceiving mechanism comprises a second time window and a second cycle, and/or a third time window and a third cycle, wherein the second cycle is a long DRX cycle, the second time window is a DRX activation window within the long DRX cycle, the third cycle is a short DRX cycle, and the third time window is a DRX activation window within the short DRX cycle;
information corresponding to the fourth transceiving mechanism comprises a fourth time window and a fourth cycle, wherein the fourth time window is a WUS activation window, and the fourth cycle is a WUS cycle;
information corresponding to the fifth transceiving mechanism comprises a fifth time window and a fifth cycle, wherein the fifth time window is a PDCCH skipping activation window, and the fifth cycle is a PDCCH skipping cycle; and
information corresponding to the sixth transceiving mechanism comprises a sixth time window and a sixth cycle, wherein the sixth time window is a search space activation window, and the sixth cycle is a search space monitoring cycle.

25. The network device of claim 23 or 24, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle;
the seventh cycle is N times the eighth cycle, wherein in case that the seventh transceiving mechanism is the third transceiving mechanism, N is an integer greater than 1; and in case that the seventh transceiving mechanism is any one of the second transceiving mechanism, the fourth transceiving mechanism, the fifth transceiving mechanism and the sixth transceiving mechanism, N is an integer greater than or equal to 1; and
a time domain relationship between the seventh time window and the eighth time window comprises at least one of the following:
a start timing of the seventh time window is not earlier than a start timing of N eighth time windows;
an end timing of the seventh time window is not later than an end timing of N eighth time windows;
the end timing of the seventh time window is not later than a start timing of a data transmission;
an interval between the start timing of the seventh time window and the start timing of the N eighth time windows satisfies a first time threshold condition;
an interval between the end timing of the seventh time window and the end timing of the N eighth time windows satisfies a second time threshold condition; and
an interval between the end timing of the seventh time window and the start timing of the data transmission satisfies a third time threshold condition.

26. The network device of claim 23 or 24, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises the eighth time window and the eighth cycle; and
a time domain relationship between the ninth time window and the eighth time window comprises at least one of the following:
a start timing of the ninth time window is not earlier than a start timing of the eighth time window;
an end timing of the ninth time window is not later than an end timing of the eighth time window;
an interval between the start timing of the ninth time window and the start timing of the eighth time window satisfies a fourth time threshold condition;
an interval between the end timing of the ninth time window and the start timing of the eighth time window satisfies a fifth time threshold condition;
the activation time point is not earlier than a start timing of an Mth eighth time window, M is an integer greater than 0; and
the deactivation time point is not later than an end timing of the Mth eighth time window, M is an integer greater than 0.

27. The network device of claim 23 or 24, wherein configuration information corresponding to the first transceiving mechanism comprises a tenth time window, wherein the tenth time window is a time window for an aperiodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle; and
a time domain relationship between the tenth time window and the eighth time window comprises at least one of the following:
a start timing of the tenth time window is not earlier than a start timing of the eighth time window;
an end timing of the tenth time window is not later than an end timing of the eighth time window;
the end timing of the tenth time window is not later than a start timing of a data transmission;
an interval between the start timing of the tenth time window and the start timing of the eighth time window satisfies a sixth time threshold condition;
an interval between the end timing of the tenth time window and the start timing of the eighth time window satisfies a seventh time threshold condition; and
an interval between the end timing of the tenth time window and the start timing of the data transmission satisfies an eighth time threshold condition.

28. The network device of claim 23 or 24, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is a minimum value between the eleventh cycle and the twelfth cycle; and
a time domain relationship between the seventh time window and a time window corresponding to the minimum value comprises at least one of the following:
a start timing of the seventh time window is not earlier than a start timing of the time window corresponding to the minimum value;
an end timing of the seventh time window is not later than an end timing of the time window corresponding to the minimum value;
the end timing of the seventh time window is not later than a start timing of a data transmission;
an interval between the start timing of the seventh time window and the start timing of the time window corresponding to the minimum value satisfies a ninth time threshold condition;
an interval between the end timing of the seventh time window and the end timing of the time window corresponding to the minimum value satisfies a tenth time threshold condition; and
an interval between the end timing of the seventh time window and the start timing of the data transmission satisfies an eleventh time threshold condition.

29. The network device of claim 23 or 24, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is any cycle of the eleventh cycle and the twelfth cycle; and
a time domain relationship between the seventh time window and a time window corresponding to the any cycle comprises at least one of the following:
a start timing of the seventh time window is not earlier than a start timing of the eleventh time window, or a start timing of the seventh time window is not earlier than a start timing of the twelfth time window;
an end timing of the seventh time window is not later than an end timing of the eleventh time window, or an end timing of the seventh time window is not later than an end timing of the twelfth time window;
the end timing of the seventh time window is not later than a start timing of a data transmission;
an interval between the start timing of the seventh time window and the start timing of the eleventh time window satisfies a twelfth time threshold condition; or, an interval between the start timing of the seventh time window and the start timing of the twelfth time window satisfies a thirteenth time threshold condition;
an interval between the end timing of the seventh time window and the end timing of the eleventh time window satisfies a fourteenth time threshold condition; or, an interval between the start timing of the seventh time window and the start timing of the twelfth time window satisfies a fifteenth time threshold condition; and
an interval between the end timing of the seventh time window and the start timing of the data transmission satisfies a sixteenth time threshold condition.

30. The network device of claim 23 or 24, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle; and
a time domain relationship between the ninth time window, the eleventh time window and the twelfth time window comprises at least one of the following:
a start timing of the ninth time window is not earlier than a first timing, wherein the first timing is an earliest start timing between a start timing of the eleventh time window and a start timing of the twelfth time window;
an end timing of the ninth time window is not later than a second timing, wherein the second timing is a latest end timing between an end timing of the eleventh time window and an end timing of the twelfth time window;
an interval between the start timing of the ninth time window and a first value satisfies a seventeenth time threshold condition, wherein the first value is an interval between the start timing of the eleventh time window and the start timing of the twelfth time window;
an interval between the end timing of the ninth time window and a second value satisfies an eighteenth time threshold condition, wherein the second value is an interval between the end timing of the eleventh time window and the end timing of the twelfth time window;
the activation time point is not earlier than a third value, wherein the third value is a start timing of an Mth eleventh time window, or a start timing of an Mth twelfth time window, M is an integer greater than 0; and
the deactivation time point is not later than a fourth value, wherein the fourth value is an end timing of the Mth eleventh time window, or an end timing of the Mth twelfth time window, M is an integer greater than 0.

31. The network device of claim 23 or 24, wherein configuration information corresponding to the first transceiving mechanism comprises a tenth time window, wherein the tenth time window is a time window for an aperiodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the tenth time window is any one of the eleventh time window and the twelfth time window; and
a time domain relationship between the tenth time window, the eleventh time window and the twelfth time window comprises at least one of the following:
a start timing of the tenth time window is not earlier than a start timing of the eleventh time window; or, a start timing of the tenth time window is not earlier than a start timing of the twelfth time window;
an end timing of the tenth time window is not later than an end timing of the eleventh time window; or, an end timing of the tenth timing is not later than an end timing of the twelfth time window;
the end timing of the tenth time window is not later than a start timing of a data transmission;
an interval between the start timing of the tenth time window and the start timing of the eleventh time window satisfies a nineteenth time threshold condition; or, an interval between the start timing of the tenth time window and the start timing of the twelfth time window satisfies a twentieth time threshold condition;
an interval between the end timing of the tenth time window and the end timing of the eleventh time window satisfies a twenty-first time threshold condition; or, an interval between the start timing of the tenth time window and the start timing of the twelfth time window satisfies a twenty-second time threshold condition; and
an interval between the end timing of the tenth time window and the start timing of the data transmission satisfies a twenty-third time threshold condition.

32. The network device of any one of claims 22 to 24, wherein the processor is further used for:
performing signal transceiving based on the configuration information.

33. A terminal device, comprising a memory, a transceiver and a processor,
wherein the memory is used for storing a computer program; the transceiver is used for transmitting and receiving data under control of the processor; and the processor is used for invoking the computer program stored in the memory and performing the following operations:
receiving configuration information used for signal transceiving, wherein the configuration information comprises information corresponding to at least two transceiving mechanisms, and the at least two transceiving mechanisms comprise a first transceiving mechanism representing channel state information, CSI, measurement and/or reporting; and
performing signal transceiving based on the configuration information.

34. The terminal device of claim 33, wherein the at least two transceiving mechanisms further comprise one or more of the following:
a second transceiving mechanism representing a physical downlink control channel, PDCCH, monitoring window or opportunity for a dedicated service;
a third transceiving mechanism representing a discontinuous reception, DRX;
a fourth transceiving mechanism representing a wake-up signal, WUS;
a fifth transceiving mechanism representing a PDCCH skipping; and
a sixth transceiving mechanism representing a search space switching.

35. The terminal device of claim 34, wherein
information corresponding to the second transceiving mechanism comprises a first time window, or a first time window and a first cycle, wherein the first time window is the PDDCH monitoring window or opportunity for the dedicated service, and the first cycle is a cycle for the PDDCH monitoring window or opportunity for the dedicated service;
information corresponding to the third transceiving mechanism comprises a second time window and a second cycle, and/or a third time window and a third cycle, wherein the second cycle is a long DRX cycle, the second time window is a DRX activation window within the long DRX cycle, the third cycle is a short DRX cycle, and the third time window is a DRX activation window within the short DRX cycle;
information corresponding to the fourth transceiving mechanism comprises a fourth time window and a fourth cycle, wherein the fourth time window is a WUS activation window, and the fourth cycle is a WUS cycle;
information corresponding to the fifth transceiving mechanism comprises a fifth time window and a fifth cycle, wherein the fifth time window is a PDCCH skipping activation window, and the fifth cycle is a PDCCH skipping cycle; and
information corresponding to the sixth transceiving mechanism comprises a sixth time window and a sixth cycle, wherein the sixth time window is a search space activation window, and the sixth cycle is a search space monitoring cycle.

36. The terminal device of claim 34 or 35, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle;
the seventh cycle is N times the eighth cycle, wherein in case that the seventh transceiving mechanism is the third transceiving mechanism, N is an integer greater than 1; and in case that the seventh transceiving mechanism is any one of the second transceiving mechanism, the fourth transceiving mechanism, the fifth transceiving mechanism and the sixth transceiving mechanism, N is an integer greater than or equal to 1; and
a time domain relationship between the seventh time window and the eighth time window comprises at least one of the following:
a start timing of the seventh time window is not earlier than a start timing of N eighth time windows;
an end timing of the seventh time window is not later than an end timing of N eighth time windows;
the end timing of the seventh time window is not later than a start timing of a data transmission;
an interval between the start timing of the seventh time window and the start timing of the N eighth time windows satisfies a first time threshold condition;
an interval between the end timing of the seventh time window and the end timing of the N eighth time windows satisfies a second time threshold condition; and
an interval between the end timing of the seventh time window and the start timing of the data transmission satisfies a third time threshold condition.

37. The terminal device of claim 34 or 35, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises the eighth time window and the eighth cycle; and
a time domain relationship between the ninth time window and the eighth time window comprises at least one of the following:
a start timing of the ninth time window is not earlier than a start timing of the eighth time window;
an end timing of the ninth time window is not later than an end timing of the eighth time window;
an interval between the start timing of the ninth time window and the start timing of the eighth time window satisfies a fourth time threshold condition;
an interval between the end timing of the ninth time window and the start timing of the eighth time window satisfies a fifth time threshold condition;
the activation time point is not earlier than a start timing of an Mth eighth time window, M is an integer greater than 0; and
the deactivation time point is not later than an end timing of the Mth eighth time window, M is an integer greater than 0.

38. The terminal device of claim 34 or 35, wherein configuration information corresponding to the first transceiving mechanism comprises a tenth time window, wherein the tenth time window is a time window for an aperiodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle; and
a time domain relationship between the tenth time window and the eighth time window comprises at least one of the following:
a start timing of the tenth time window is not earlier than a start timing of the eighth time window;
an end timing of the tenth time window is not later than an end timing of the eighth time window;
the end timing of the tenth time window is not later than a start timing of a data transmission;
an interval between the start timing of the tenth time window and the start timing of the eighth time window satisfies a sixth time threshold condition;
an interval between the end timing of the tenth time window and the start timing of the eighth time window satisfies a seventh time threshold condition; and
an interval between the end timing of the tenth time window and the start timing of the data transmission satisfies an eighth time threshold condition.

39. The terminal device of claim 34 or 35, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is a minimum value between the eleventh cycle and the twelfth cycle; and
a time domain relationship between the seventh time window and a time window corresponding to the minimum value comprises at least one of the following:
a start timing of the seventh time window is not earlier than a start timing of the time window corresponding to the minimum value;
an end timing of the seventh time window is not later than an end timing of the time window corresponding to the minimum value;
the end timing of the seventh time window is not later than a start timing of a data transmission;
an interval between the start timing of the seventh time window and the start timing of the time window corresponding to the minimum value satisfies a ninth time threshold condition;
an interval between the end timing of the seventh time window and the end timing of the time window corresponding to the minimum value satisfies a tenth time threshold condition; and
an interval between the end timing of the seventh time window and the start timing of the data transmission satisfies an eleventh time threshold condition.

40. The terminal device of claim 34 or 35, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is any cycle of the eleventh cycle and the twelfth cycle; and
a time domain relationship between the seventh time window and a time window corresponding to the any cycle comprises at least one of the following:
a start timing of the seventh time window is not earlier than a start timing of the eleventh time window, or a start timing of the seventh time window is not earlier than a start timing of the twelfth time window;
an end timing of the seventh time window is not later than an end timing of the eleventh time window, or an end timing of the seventh time window is not later than an end timing of the twelfth time window;
the end timing of the seventh time window is not later than a start timing of a data transmission;
an interval between the start timing of the seventh time window and the start timing of the eleventh time window satisfies a twelfth time threshold condition; or, an interval between the start timing of the seventh time window and the start timing of the twelfth time window satisfies a thirteenth time threshold condition;
an interval between the end timing of the seventh time window and the end timing of the eleventh time window satisfies a fourteenth time threshold condition; or, an interval between the start timing of the seventh time window and the start timing of the twelfth time window satisfies a fifteenth time threshold condition; and
an interval between the end timing of the seventh time window and the start timing of the data transmission satisfies a sixteenth time threshold condition.

41. The terminal device of claim 34 or 35, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism; information corresponding to the eighth transceiving mechanism comprises an eleventh time window and an eleventh cycle, and information corresponding to the ninth transceiving mechanism comprises a twelfth time window and a twelfth cycle; and
a time domain relationship between the ninth time window, the eleventh time window and the twelfth time window comprises at least one of the following:
a start timing of the ninth time window is not earlier than a first timing, wherein the first timing is an earliest start timing between a start timing of the eleventh time window and a start timing of the twelfth time window;
an end timing of the ninth time window is not later than a second timing, wherein the second timing is a latest end timing between an end timing of the eleventh time window and an end timing of the twelfth time window;
an interval between the start timing of the ninth time window and a first value satisfies a seventeenth time threshold condition, wherein the first value is an interval between the start timing of the eleventh time window and the start timing of the twelfth time window;
an interval between the end timing of the ninth time window and a second value satisfies an eighteenth time threshold condition, wherein the second value is an interval between the end timing of the eleventh time window and the end timing of the twelfth time window;
the activation time point is not earlier than a third value, wherein the third value is a start timing of an Mth eleventh time window, or a start timing of an Mth twelfth time window, M is an integer greater than 0; and
the deactivation time point is not later than a fourth value, wherein the fourth value is an end timing of the Mth eleventh time window, or an end timing of the Mth twelfth time window, M is an integer greater than 0.

42. The terminal device of claim 34 or 35, wherein configuration information corresponding to the first transceiving mechanism comprises a tenth time window, wherein the tenth time window is a time window for an aperiodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the tenth time window is any one of the eleventh time window and the twelfth time window; and
a time domain relationship between the tenth time window, the eleventh time window and the twelfth time window comprises at least one of the following:
a start timing of the tenth time window is not earlier than a start timing of the eleventh time window; or, a start timing of the tenth time window is not earlier than a start timing of the twelfth time window;
an end timing of the tenth time window is not later than an end timing of the eleventh time window; or, an end timing of the tenth timing is not later than an end timing of the twelfth time window;
the end timing of the tenth time window is not later than a start timing of a data transmission;
an interval between the start timing of the tenth time window and the start timing of the eleventh time window satisfies a nineteenth time threshold condition; or, an interval between the start timing of the tenth time window and the start timing of the twelfth time window satisfies a twentieth time threshold condition;
an interval between the end timing of the tenth time window and the end timing of the eleventh time window satisfies a twenty-first time threshold condition; or, an interval between the start timing of the tenth time window and the start timing of the twelfth time window satisfies a twenty-second time threshold condition; and
an interval between the end timing of the tenth time window and the start timing of the data transmission satisfies a twenty-third time threshold condition.

43. A signal transceiving apparatus, applied to a network device, comprising:
a configuring unit, used for generating configuration information used for signal transceiving, wherein the configuration information comprises information corresponding to at least two transceiving mechanisms, and the at least two transceiving mechanisms comprise a first transceiving mechanism representing channel state information, CSI, measurement and/or reporting; and
a transmitting unit, used for transmitting the configuration information to a terminal, to make the terminal perform signal transceiving based on the configuration information.

44. The apparatus of claim 43, wherein the at least two transceiving mechanisms further comprise one or more of the following:
a second transceiving mechanism representing a physical downlink control channel, PDCCH, monitoring window or opportunity for a dedicated service;
a third transceiving mechanism representing a discontinuous reception, DRX;
a fourth transceiving mechanism representing a wake-up signal, WUS;
a fifth transceiving mechanism representing a PDCCH skipping; and
a sixth transceiving mechanism representing a search space switching.

45. The apparatus of claim 44, wherein
information corresponding to the second transceiving mechanism comprises a first time window, or a first time window and a first cycle, wherein the first time window is the PDDCH monitoring window or opportunity for the dedicated service, and the first cycle is a cycle for the PDDCH monitoring window or opportunity for the dedicated service;
information corresponding to the third transceiving mechanism comprises a second time window and a second cycle, and/or a third time window and a third cycle, wherein the second cycle is a long DRX cycle, the second time window is a DRX activation window within the long DRX cycle, the third cycle is a short DRX cycle, and the third time window is a DRX activation window within the short DRX cycle;
information corresponding to the fourth transceiving mechanism comprises a fourth time window and a fourth cycle, wherein the fourth time window is a WUS activation window, and the fourth cycle is a WUS cycle;
information corresponding to the fifth transceiving mechanism comprises a fifth time window and a fifth cycle, wherein the fifth time window is a PDCCH skipping activation window, and the fifth cycle is a PDCCH skipping cycle; and
information corresponding to the sixth transceiving mechanism comprises a sixth time window and a sixth cycle, wherein the sixth time window is a search space activation window, and the sixth cycle is a search space monitoring cycle.

46. The apparatus of claim 44 or 45, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle;
the seventh cycle is N times the eighth cycle, wherein in case that the seventh transceiving mechanism is the third transceiving mechanism, N is an integer greater than 1; and in case that the seventh transceiving mechanism is any one of the second transceiving mechanism, the fourth transceiving mechanism, the fifth transceiving mechanism and the sixth transceiving mechanism, N is an integer greater than or equal to 1; and
a time domain relationship between the seventh time window and the eighth time window comprises at least one of the following:
a start timing of the seventh time window is not earlier than a start timing of N eighth time windows;
an end timing of the seventh time window is not later than an end timing of N eighth time windows;
the end timing of the seventh time window is not later than a start timing of a data transmission;
an interval between the start timing of the seventh time window and the start timing of the N eighth time windows satisfies a first time threshold condition;
an interval between the end timing of the seventh time window and the end timing of the N eighth time windows satisfies a second time threshold condition; and
an interval between the end timing of the seventh time window and the start timing of the data transmission satisfies a third time threshold condition.

47. The apparatus of claim 44 or 45, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises the eighth time window and the eighth cycle; and
a time domain relationship between the ninth time window and the eighth time window comprises at least one of the following:
a start timing of the ninth time window is not earlier than a start timing of the eighth time window;
an end timing of the ninth time window is not later than an end timing of the eighth time window;
an interval between the start timing of the ninth time window and the start timing of the eighth time window satisfies a fourth time threshold condition;
an interval between the end timing of the ninth time window and the start timing of the eighth time window satisfies a fifth time threshold condition;
the activation time point is not earlier than a start timing of an Mth eighth time window, M is an integer greater than 0; and
the deactivation time point is not later than an end timing of the Mth eighth time window, M is an integer greater than 0.

48. The apparatus of claim 44 or 45, wherein configuration information corresponding to the first transceiving mechanism comprises a tenth time window, wherein the tenth time window is a time window for an aperiodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle; and
a time domain relationship between the tenth time window and the eighth time window comprises at least one of the following:
a start timing of the tenth time window is not earlier than a start timing of the eighth time window;
an end timing of the tenth time window is not later than an end timing of the eighth time window;
the end timing of the tenth time window is not later than a start timing of a data transmission;
an interval between the start timing of the tenth time window and the start timing of the eighth time window satisfies a sixth time threshold condition;
an interval between the end timing of the tenth time window and the start timing of the eighth time window satisfies a seventh time threshold condition; and
an interval between the end timing of the tenth time window and the start timing of the data transmission satisfies an eighth time threshold condition.

49. The apparatus of claim 44 or 45, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is a minimum value between the eleventh cycle and the twelfth cycle; and
a time domain relationship between the seventh time window and a time window corresponding to the minimum value comprises at least one of the following:
a start timing of the seventh time window is not earlier than a start timing of the time window corresponding to the minimum value;
an end timing of the seventh time window is not later than an end timing of the time window corresponding to the minimum value;
the end timing of the seventh time window is not later than a start timing of a data transmission;
an interval between the start timing of the seventh time window and the start timing of the time window corresponding to the minimum value satisfies a ninth time threshold condition;
an interval between the end timing of the seventh time window and the end timing of the time window corresponding to the minimum value satisfies a tenth time threshold condition; and
an interval between the end timing of the seventh time window and the start timing of the data transmission satisfies an eleventh time threshold condition.

50. The apparatus of claim 44 or 45, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is any cycle of the eleventh cycle and the twelfth cycle; and
a time domain relationship between the seventh time window and a time window corresponding to the any cycle comprises at least one of the following:
a start timing of the seventh time window is not earlier than a start timing of the eleventh time window, or a start timing of the seventh time window is not earlier than a start timing of the twelfth time window;
an end timing of the seventh time window is not later than an end timing of the eleventh time window, or an end timing of the seventh time window is not later than an end timing of the twelfth time window;
the end timing of the seventh time window is not later than a start timing of a data transmission;
an interval between the start timing of the seventh time window and the start timing of the eleventh time window satisfies a twelfth time threshold condition; or, an interval between the start timing of the seventh time window and the start timing of the twelfth time window satisfies a thirteenth time threshold condition;
an interval between the end timing of the seventh time window and the end timing of the eleventh time window satisfies a fourteenth time threshold condition; or, an interval between the start timing of the seventh time window and the start timing of the twelfth time window satisfies a fifteenth time threshold condition; and
an interval between the end timing of the seventh time window and the start timing of the data transmission satisfies a sixteenth time threshold condition.

51. The apparatus of claim 44 or 45, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle; and
a time domain relationship between the ninth time window, the eleventh time window and the twelfth time window comprises at least one of the following:
a start timing of the ninth time window is not earlier than a first timing, wherein the first timing is an earliest start timing between a start timing of the eleventh time window and a start timing of the twelfth time window;
an end timing of the ninth time window is not later than a second timing, wherein the second timing is a latest end timing between an end timing of the eleventh time window and an end timing of the twelfth time window;
an interval between the start timing of the ninth time window and a first value satisfies a seventeenth time threshold condition, wherein the first value is an interval between the start timing of the eleventh time window and the start timing of the twelfth time window;
an interval between the end timing of the ninth time window and a second value satisfies an eighteenth time threshold condition, wherein the second value is an interval between the end timing of the eleventh time window and the end timing of the twelfth time window;
the activation time point is not earlier than a third value, wherein the third value is a start timing of an Mth eleventh time window, or a start timing of an Mth twelfth time window, M is an integer greater than 0; and
the deactivation time point is not later than a fourth value, wherein the fourth value is an end timing of the Mth eleventh time window, or an end timing of the Mth twelfth time window, M is an integer greater than 0.

52. The apparatus of claim 44 or 45, wherein configuration information corresponding to the first transceiving mechanism comprises a tenth time window, wherein the tenth time window is a time window for an aperiodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the tenth time window is any one of the eleventh time window and the twelfth time window; and
a time domain relationship between the tenth time window, the eleventh time window and the twelfth time window comprises at least one of the following:
a start timing of the tenth time window is not earlier than a start timing of the eleventh time window; or, a start timing of the tenth time window is not earlier than a start timing of the twelfth time window;
an end timing of the tenth time window is not later than an end timing of the eleventh time window; or, an end timing of the tenth timing is not later than an end timing of the twelfth time window;
the end timing of the tenth time window is not later than a start timing of a data transmission;
an interval between the start timing of the tenth time window and the start timing of the eleventh time window satisfies a nineteenth time threshold condition; or, an interval between the start timing of the tenth time window and the start timing of the twelfth time window satisfies a twentieth time threshold condition;
an interval between the end timing of the tenth time window and the end timing of the eleventh time window satisfies a twenty-first time threshold condition; or, an interval between the start timing of the tenth time window and the start timing of the twelfth time window satisfies a twenty-second time threshold condition; and
an interval between the end timing of the tenth time window and the start timing of the data transmission satisfies a twenty-third time threshold condition.

53. The apparatus of any one of claims 44 to 45, wherein the transmitting unit is further used for:
performing signal transceiving based on the configuration information.

54. A signal transceiving apparatus, applied to a terminal device, comprising:
a receiving unit, used for receiving configuration information used for signal transceiving, wherein the configuration information comprises information corresponding to at least two transceiving mechanisms, and the at least two transceiving mechanisms comprise a first transceiving mechanism representing channel state information, CSI, measurement and/or reporting; and
a signal transceiving unit, used for performing signal transceiving based on the configuration information.

55. The apparatus of claim 54, wherein the at least two transceiving mechanisms further comprise one or more of the following:
a second transceiving mechanism representing a physical downlink control channel, PDCCH, monitoring window or opportunity for a dedicated service;
a third transceiving mechanism representing a discontinuous reception, DRX;
a fourth transceiving mechanism representing a wake-up signal, WUS;
a fifth transceiving mechanism representing a PDCCH skipping; and
a sixth transceiving mechanism representing a search space switching.

56. The apparatus of claim 55, wherein
information corresponding to the second transceiving mechanism comprises a first time window, or a first time window and a first cycle, wherein the first time window is the PDDCH monitoring window or opportunity for the dedicated service, and the first cycle is a cycle for the PDDCH monitoring window or opportunity for the dedicated service;
information corresponding to the third transceiving mechanism comprises a second time window and a second cycle, and/or a third time window and a third cycle, wherein the second cycle is a long DRX cycle, the second time window is a DRX activation window within the long DRX cycle, the third cycle is a short DRX cycle, and the third time window is a DRX activation window within the short DRX cycle;
information corresponding to the fourth transceiving mechanism comprises a fourth time window and a fourth cycle, wherein the fourth time window is a WUS activation window, and the fourth cycle is a WUS cycle;
information corresponding to the fifth transceiving mechanism comprises a fifth time window and a fifth cycle, wherein the fifth time window is a PDCCH skipping activation window, and the fifth cycle is a PDCCH skipping cycle; and
information corresponding to the sixth transceiving mechanism comprises a sixth time window and a sixth cycle, wherein the sixth time window is a search space activation window, and the sixth cycle is a search space monitoring cycle.

57. The apparatus of claim 55 or 56, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle;
the seventh cycle is N times the eighth cycle, wherein in case that the seventh transceiving mechanism is the third transceiving mechanism, N is an integer greater than 1; and in case that the seventh transceiving mechanism is any one of the second transceiving mechanism, the fourth transceiving mechanism, the fifth transceiving mechanism and the sixth transceiving mechanism, N is an integer greater than or equal to 1; and
a time domain relationship between the seventh time window and the eighth time window comprises at least one of the following:
a start timing of the seventh time window is not earlier than a start timing of N eighth time windows;
an end timing of the seventh time window is not later than an end timing of N eighth time windows;
the end timing of the seventh time window is not later than a start timing of a data transmission;
an interval between the start timing of the seventh time window and the start timing of the N eighth time windows satisfies a first time threshold condition;
an interval between the end timing of the seventh time window and the end timing of the N eighth time windows satisfies a second time threshold condition; and
an interval between the end timing of the seventh time window and the start timing of the data transmission satisfies a third time threshold condition.

58. The apparatus of claim 55 or 56, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises the eighth time window and the eighth cycle; and
a time domain relationship between the ninth time window and the eighth time window comprises at least one of the following:
a start timing of the ninth time window is not earlier than a start timing of the eighth time window;
an end timing of the ninth time window is not later than an end timing of the eighth time window;
an interval between the start timing of the ninth time window and the start timing of the eighth time window satisfies a fourth time threshold condition;
an interval between the end timing of the ninth time window and the start timing of the eighth time window satisfies a fifth time threshold condition;
the activation time point is not earlier than a start timing of an Mth eighth time window, M is an integer greater than 0; and
the deactivation time point is not later than an end timing of the Mth eighth time window, M is an integer greater than 0.

59. The apparatus of claim 55 or 56, wherein configuration information corresponding to the first transceiving mechanism comprises a tenth time window, wherein the tenth time window is a time window for an aperiodic CSI measurement and/or reporting;
a seventh transceiving mechanism is used for representing any one of the second transceiving mechanism, the third transceiving mechanism, the fourth transceiving mechanism, the fifth transceiving mechanism and the sixth transceiving mechanism, and information corresponding to the seventh transceiving mechanism comprises an eighth time window and an eighth cycle; and
a time domain relationship between the tenth time window and the eighth time window comprises at least one of the following:
a start timing of the tenth time window is not earlier than a start timing of the eighth time window;
an end timing of the tenth time window is not later than an end timing of the eighth time window;
the end timing of the tenth time window is not later than a start timing of a data transmission;
an interval between the start timing of the tenth time window and the start timing of the eighth time window satisfies a sixth time threshold condition;
an interval between the end timing of the tenth time window and the start timing of the eighth time window satisfies a seventh time threshold condition; and
an interval between the end timing of the tenth time window and the start timing of the data transmission satisfies an eighth time threshold condition.

60. The apparatus of claim 55 or 56, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is a minimum value between the eleventh cycle and the twelfth cycle; and
a time domain relationship between the seventh time window and a time window corresponding to the minimum value comprises at least one of the following:
a start timing of the seventh time window is not earlier than a start timing of the time window corresponding to the minimum value;
an end timing of the seventh time window is not later than an end timing of the time window corresponding to the minimum value;
the end timing of the seventh time window is not later than a start timing of a data transmission;
an interval between the start timing of the seventh time window and the start timing of the time window corresponding to the minimum value satisfies a ninth time threshold condition;
an interval between the end timing of the seventh time window and the end timing of the time window corresponding to the minimum value satisfies a tenth time threshold condition; and
an interval between the end timing of the seventh time window and the start timing of the data transmission satisfies an eleventh time threshold condition.

61. The apparatus of claim 55 or 56, wherein configuration information corresponding to the first transceiving mechanism comprises a seventh time window and a seventh cycle, wherein the seventh time window is a time window for a periodic CSI measurement and/or reporting, and the seventh cycle is a reporting cycle for the periodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the seventh cycle is any cycle of the eleventh cycle and the twelfth cycle; and
a time domain relationship between the seventh time window and a time window corresponding to the any cycle comprises at least one of the following:
a start timing of the seventh time window is not earlier than a start timing of the eleventh time window, or a start timing of the seventh time window is not earlier than a start timing of the twelfth time window;
an end timing of the seventh time window is not later than an end timing of the eleventh time window, or an end timing of the seventh time window is not later than an end timing of the twelfth time window;
the end timing of the seventh time window is not later than a start timing of a data transmission;
an interval between the start timing of the seventh time window and the start timing of the eleventh time window satisfies a twelfth time threshold condition; or, an interval between the start timing of the seventh time window and the start timing of the twelfth time window satisfies a thirteenth time threshold condition;
an interval between the end timing of the seventh time window and the end timing of the eleventh time window satisfies a fourteenth time threshold condition; or, an interval between the start timing of the seventh time window and the start timing of the twelfth time window satisfies a fifteenth time threshold condition; and
an interval between the end timing of the seventh time window and the start timing of the data transmission satisfies a sixteenth time threshold condition.

62. The apparatus of claim 55 or 56, wherein configuration information corresponding to the first transceiving mechanism comprises a ninth time window and a ninth cycle, wherein a start point of the ninth cycle is an activation time point of a semi-persistent CSI measurement and/or reporting, an end point of the ninth cycle is a deactivation time point of the semi-persistent CSI measurement and/or reporting, and the ninth time window is an activation time window within the ninth cycle;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle; and
a time domain relationship between the ninth time window, the eleventh time window and the twelfth time window comprises at least one of the following:
a start timing of the ninth time window is not earlier than a first timing, wherein the first timing is an earliest start timing between a start timing of the eleventh time window and a start timing of the twelfth time window;
an end timing of the ninth time window is not later than a second timing, wherein the second timing is a latest end timing between an end timing of the eleventh time window and an end timing of the twelfth time window;
an interval between the start timing of the ninth time window and a first value satisfies a seventeenth time threshold condition, wherein the first value is an interval between the start timing of the eleventh time window and the start timing of the twelfth time window;
an interval between the end timing of the ninth time window and a second value satisfies an eighteenth time threshold condition, wherein the second value is an interval between the end timing of the eleventh time window and the end timing of the twelfth time window;
the activation time point is not earlier than a third value, wherein the third value is a start timing of an Mth eleventh time window, or a start timing of an Mth twelfth time window, M is an integer greater than 0; and
the deactivation time point is not later than a fourth value, wherein the fourth value is an end timing of the Mth eleventh time window, or an end timing of the Mth twelfth time window, M is an integer greater than 0.

63. The apparatus of claim 55 or 56, wherein configuration information corresponding to the first transceiving mechanism comprises a tenth time window, wherein the tenth time window is a time window for an aperiodic CSI measurement and/or reporting;
an eighth transceiving mechanism and a ninth transceiving mechanism are used for representing any two of the second transceiving mechanism, the third transceiving mechanism, the fourth transceiving mechanism, the fifth transceiving mechanism and the sixth transceiving mechanism, information corresponding to the eighth transceiving mechanism comprises an eleventh time window and an eleventh cycle, and information corresponding to the ninth transceiving mechanism comprises a twelfth time window and a twelfth cycle;
the tenth time window is any one of the eleventh time window and the twelfth time window; and
a time domain relationship between the tenth time window, the eleventh time window and the twelfth time window comprises at least one of the following:
a start timing of the tenth time window is not earlier than a start timing of the eleventh time window; or, a start timing of the tenth time window is not earlier than a start timing of the twelfth time window;
an end timing of the tenth time window is not later than an end timing of the eleventh time window; or, an end timing of the tenth timing is not later than an end timing of the twelfth time window;
the end timing of the tenth time window is not later than a start timing of a data transmission;
an interval between the start timing of the tenth time window and the start timing of the eleventh time window satisfies a nineteenth time threshold condition; or, an interval between the start timing of the tenth time window and the start timing of the twelfth time window satisfies a twentieth time threshold condition;
an interval between the end timing of the tenth time window and the end timing of the eleventh time window satisfies a twenty-first time threshold condition; or, an interval between the start timing of the tenth time window and the start timing of the twelfth time window satisfies a twenty-second time threshold condition; and
an interval between the end timing of the tenth time window and the start timing of the data transmission satisfies a twenty-third time threshold condition.

64. A processor-readable storage medium storing computer programs that, when executed by a processor, cause the processor to perform the method of any one of claims 1 to 11.

65. A processor-readable storage medium storing computer programs that, when executed by a processor, cause the processor to perform the method of any one of claims 12 to 21.
